# EUROPÄISCHE PATENTSCHRIFT

(11) **EP 3 040 182 B1**
(45) Veröffentlichungstag und Bekanntmachung des Hinweises auf die Patenterteilung: **27.01.2021**
(21) Anmeldenummer: 16154858.1
(22) Anmeldetag: 23.03.2012
(51) Int. Cl.: B21D 22/02, B29C 70/84, B29C 73/10, B32B 7/12, B32B 15/08, B32B 15/20, B29D 99/00, B32B 37/04, B32B 38/18, B64C 1/12, B29C 65/50, B32B 38/16, B29C 65/48, B29C 65/00

(54) **VERFAHREN ZUR HERSTELLUNG EINES STRUKTURBAUTEILS, HALBZEUG, VERFAHREN ZUR HERSTELLUNG EINES HALBZEUGS, STRUKTURBAUTEIL, SOWIE LUFT- ODER RAUMFAHRZEUG**
METHOD FOR PRODUCING A STRUCTURAL ELEMENT, SEMI-FINISHED PRODUCT, METHOD FOR PRODUCING A SEMI-FINISHED PRODUCT, STRUCTURAL ELEMENT, AND AIRCRAFT OR SPACECRAFT
PROCEDE DE FABRICATION D'UN COMPOSANT STRUCTURAL, DEMI-PRODUIT, PROCEDE DE FABRICATION D'UN DEMI-PRODUIT, COMPOSANT STRUCTURAL ET VEHICULES AERONAUTIQUES OU SPATIAUX

(30) Priorität: 24.03.2011 DE 102011006032; 24.03.2011 US 201161466964 P
(43) Veröffentlichungstag der Anmeldung: 06.07.2016
(62) Teilanmeldung aus: 12713648.9
(73) Patentinhaber: Airbus Operations GmbH, 21129 Hamburg (DE)
(72) Erfinder: Pacchione, Marco, 21129 Hamburg (DE); Fideu, Paulin, 21129 Hamburg (DE)

(56) Entgegenhaltungen:
- EP-A1- 0 473 843
- EP-A2- 0 547 664
- EP-A2- 2 688 729
- Nasa Tech Brief: "NASA tech brief", , 30. Dezember 1966 (1966-12-30), Seiten 1-1, XP055271747, Springfield, Virginia 22151 Gefunden im Internet: URL:http://ntrs.nasa.gov/archive/nasa/casi .ntrs.nasa.gov/19660000580.pdf [gefunden am 2016-05-11]

## Beschreibung

Die vorliegende Erfindung bezieht sich auf die Herstellung eines Strukturbauteils, insbesondere für die Luft- oder Raumfahrt, und betrifft ein Halbzeug für die Herstellung eines Strukturbauteils und ein Verfahren zur Herstellung eines Halbzeugs. Darüber hinaus betrifft die Erfindung ein Strukturbauteil, insbesondere für ein Luft- oder Raumfahrzeug, und ein Luft- oder Raumfahrzeug mit einem derartigen Strukturbauteil.

Obwohl die vorliegende Erfindung auf Strukturbauteile auf beliebigen Gebieten der Technik, zum Beispiel auch bei unterschiedlichsten Konstruktionen, bei denen eine Leichtbauweise angestrebt wird, anwendbar ist, werden die Erfindung und die ihr zugrunde liegende Problematik nachfolgend im Hinblick auf Strukturbauteile für Luft- oder Raumfahrzeuge, insbesondere für Flugzeuge, näher erläutert, ohne die Erfindung jedoch dahingehend einzuschränken.

Bei Luft- und Raumfahrzeugen wird bekanntermaßen in der Regel angestrebt, das Strukturgewicht möglichst weitgehend zu verringern, ohne Einbußen bei den mechanischen Eigenschaften wie etwa Belastbarkeit und Steifigkeit der Struktur hinnehmen zu müssen. Seit längerem kommen daher auf diesem Gebiet dünnwandige, mit Versteifungselementen wie etwa Spanten und Stringern versteifte Schalenbauteile aus Aluminium, zum Beispiel für den Rumpf eines Flugzeugs, zum Einsatz. Um den Anforderungen im Hinblick auf ein gutes Strömungsverhalten eines Luftfahrzeugs im Fluge Rechnung zu tragen, ist die Haut derartiger Schalen heutzutage oftmals im Raum, mit anderen Worten, in drei Raumdimensionen, gekrümmt. Zusätzlich werden bei modernen Verkehrsflugzeugen hohe Anforderungen an die Genauigkeit, mit der eine vorgegebene, beispielsweise durch Simulation bestimmte Zielgeometrie der Flugzeugaußenhaut in der Herstellung erreicht werden soll, gestellt.

Die Formgebung der Schalenhaut kann zum Beispiel durch Kriechumformen bewerkstelligt werden. In der DE 100 47 491 A1 und der US 7,217,331 B2 ist ein Verfahren zum Kriechumformen von Strukturen aus Aluminiumlegierungen unter der Einwirkung von Wärme beschrieben, durch welches ein "Zurückfedern" der umgeformten Struktur, der so genannte "Spring back"-Effekt, nach dem Entnehmen der Struktur aus der Form vermieden werden soll. Mit Hilfe dieses vorbekannten Verfahrens soll erreicht werden, dass die zum Umformen verwendeten Formen bereits mit der angestrebten Endgeometrie der Struktur versehen werden können. Eine aufwendige und komplizierte Simulation des "Spring back" zur Ermittlung einer abweichenden Geometrie der verwendeten Formen soll vermieden werden.

Die EP 0 473 843 A1 beschreibt das Verkleben von Blechen eines Laminats mittels einer Klebeschicht. Erst nach einem Verformen wird eine Erwärmung zur Aushärtung der Bleche vorgenommen.

Die Druckschrift NASA Tech Brief "Composite Bulkhead Fabrication Development", Brief 66-10582, Springfield, Virginia, 30. Dezember 1966, beschreibt das Herstellen eines Verbundschotts mit einer Haut aus der Aluminiumlegierung 2219. Zeitlich versetzt und separat werden eine innere und eine äußere Haut umgeformt. Ein Verkleben eines Wabenkerns mit der äußeren Haut mittels eines Klebefilms, der bei einer Temperatur von 325°F ausgehärtet wird, wird beschrieben.

Die Herstellung von mehrfach gekrümmten Schalenbauteilen ist jedoch dennoch weiterhin mit einem großen Zeit- und Kostenaufwand verbunden. Das Umformen von Hautelementen und Versteifungselementen für derartige Schalenbauteile einerseits und das Befestigen der Versteifungselemente an den Hautelementen andererseits in jeweils separaten Arbeitsgängen führen zu einem hohen Aufwand bei der Handhabung der Werkstücke und einem recht langwierigen Herstellungsprozess. Eine Verringerung des Handhabungsaufwands und der Fertigungsdauer wären wünschenswert. Bei einem getrennten Umformen von Hautelementen und Versteifungselementen ist ein hoher Aufwand erforderlich, um sicherzustellen, dass diese Bauelemente anschließend passgenau miteinander verbunden werden können. Diesen Zustand gilt es zu verbessern.

Vor diesem Hintergrund ist es Aufgabe der vorliegenden Erfindung, den zur Herstellung derartiger Strukturbauteile erforderlichen Aufwand zu verringern und die Anzahl der zur Herstellung durchzuführenden Verfahrensschritte zu vermindern. Erfindungsgemäß wird diese Aufgabe durch ein Halbzeug mit den Merkmalen des Patentanspruchs 1, durch eine Verwendung eines Halbzeugs mit den Merkmalen des Patentanspruchs 7 und/oder durch ein Verfahren zur Herstellung eines Halbzeugs mit den Merkmalen des Patentanspruchs 12 gelöst. Ferner wird die Aufgabe erfindungsgemäß durch ein Strukturbauteil mit den Merkmalen des Patentanspruchs 10 und/oder durch ein Luft- oder Raumfahrzeug mit den Merkmalen des Patentanspruchs 11 gelöst.

Die abhängigen Ansprüche definieren vorteilhafte Weiterbildungen der Erfindung.

Die Erfindung wird im Folgenden anhand von veranschaulichenden Beispielen und Ausführungsbeispielen unter Bezugnahme auf die beiliegenden schematischen Figuren der Zeichnung näher erläutert.

Von den Figuren zeigen:
- Fig. 1A,B: ein Flugzeug in einer Vorderansicht und einer Draufsicht;
- Fig. 2A-C: die Herstellung eines Strukturbauteils oder eines Halbzeugs gemäß einem ersten Ausführungsbeispiel der Erfindung, in einer Schnittansicht;
- Fig. 3A-C: die Herstellung eines Strukturbauteils gemäß einem zweiten veranschaulichenden Beispiel, in einer Schnittansicht;
- Fig. 4: das Einlegen eines Films oder einer Folie aus einem thermoplastischen Kunststoffmaterial zwischen zwei Bauteilkomponenten oder zwei Lagen eines durch Kriechumformen umformbaren Materials, in einer Schnittansicht;
- Fig. 5: das Beschichten einer zweiten Bauteilkomponente oder einer zweiten Lage eines durch Kriechumformen umformbaren Materials mit einem thermoplastischen Kunststoffmaterial, in einer Schnittansicht;
- Fig. 5A: das Beschichten einer ersten Bauteilkomponente oder einer ersten Lage eines durch Kriechumformen umformbaren Materials mit einem thermoplastischen Kunststoffmaterial, in einer Schnittansicht;
- Fig. 5B: das Beschichten einer ersten und einer zweiten Bauteilkomponente oder einer ersten und einer zweiten Lage eines durch Kriechumformen umformbaren Materials mit einem thermoplastischen Kunststoffmaterial, in einer Schnittansicht;
- Fig. 6: das Einlegen eines Films oder einer Folie aus einem thermoplastischen Kunststoffmaterial zwischen ein Versteifungselement und eine Schalenhaut für ein Strukturbauteil und das Beschichten einer Oberfläche eines anderen Versteifungselements für die Schalenhaut mit einem thermoplastischen Kunststoffmaterial, in einer Schnittansicht;
- Fig. 6A: das Beschichten eines Oberflächenabschnitts einer Schalenhaut mit einem thermoplastischen Kunststoffmaterial gemäß einer Variante, sowie das Beschichten einer Oberfläche eines Versteifungselements und das Beschichten eines anderen Oberflächenabschnitts der Schalenhaut mit einem thermoplastischen Kunststoffmaterial gemäß einer weiteren Variante;
- Fig. 7A-C: die Herstellung eines Strukturbauteils gemäß einem dritten veranschaulichenden Beispiel, in einer Schnittansicht;
- Fig. 8A-C: die Herstellung eines Strukturbauteils gemäß einem vierten veranschaulichenden Beispiel, in einer Schnittansicht;
- Fig. 9A-C: die Herstellung eines Strukturbauteils gemäß einem fünften veranschaulichenden Beispiel, in einer Schnittansicht;
- Fig. 10A-C: die Herstellung eines Strukturbauteils gemäß einem sechsten veranschaulichenden Beispiel, in einer Schnittansicht;
- Fig. 11A-C: die Herstellung eines Strukturbauteils gemäß einem siebten veranschaulichenden Beispiel, in einer Schnittansicht;
- Fig. 12A-C: die Herstellung eines Strukturbauteils oder eines Halbzeugs gemäß einem achten Ausführungsbeispiel der Erfindung, in einer Schnittansicht;
- Fig. 13A-C: die Herstellung eines Strukturbauteils oder eines Halbzeugs gemäß einem neunten Ausführungsbeispiel der Erfindung, in einer Schnittansicht;
- Fig. 14A-C: die Herstellung eines Strukturbauteils gemäß einem zehnten Ausführungsbeispiel der Erfindung, in einer Schnittansicht;
- Fig. 15A-C: Schritte eines Verfahrens zur Herstellung eines Strukturbauteils gemäß einem elften veranschaulichenden Beispiel und Ausführungsbeispiel der Erfindung, in einer Schnittansicht;
- Fig. 15D: ein weiterer Schritt eines Verfahrens zur Herstellung eines Strukturbauteils gemäß dem elften veranschaulichenden Beispiel und Ausführungsbeispiel, welcher sich an die Schritte der Figuren 15A-C anschließt;
- Fig. 15E: ein weiterer Schritt eines Verfahrens zur Herstellung eines Strukturbauteils, der bei einer Variante des elften veranschaulichenden Beispiels und Ausführungsbeispiels an die Stelle des in Figur 15D gezeigten Schrittes tritt;
- Fig. 15F: eine Variante des in Figur 15C gezeigten Verfahrensschrittes;
- Fig. 16A-C: die Herstellung eines Strukturbauteils gemäß einem zwölften veranschaulichenden Beispiel und Ausführungsbeispiel der Erfindung, in einer Schnittansicht; und
- Fig. 17: das Reparieren eines Strukturbauteils mit mehreren Schadstellen mittels unterschiedlich ausgestalteter Doppler, in einer Schnittansicht.

In den Figuren bezeichnen dieselben Bezugszeichen gleiche oder funktionsgleiche Komponenten, soweit nichts Gegenteiliges angegeben ist.

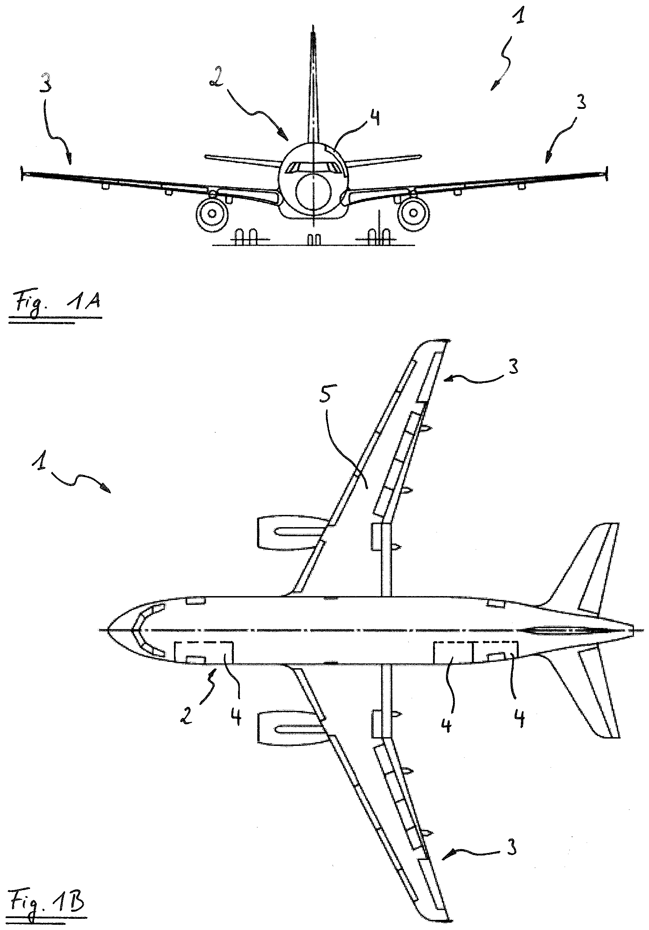

Die Figuren 1A und 1B zeigen ein Flugzeug 1, hier ein modernes Verkehrsflugzeug, in einer Vorderansicht und einer Draufsicht. Das Flugzeug 1 weist einen Rumpf 2 auf, an dem beidseits Flügel 3 angeordnet sind. Große Teile des Rumpfes 2 und der Flügel 3 sind aus Schalenbauteilen mit einer relativ dünnen Schalenhaut zusammengesetzt. Auf die Steifigkeit sowie die Beul- und Knickfestigkeit der Schalenhaut wird durch das Anbringen von Versteifungselementen, insbesondere von Stringern und Spanten, welche in Fig. 1A und 1B nicht sichtbar sind, auf Innenseiten der Schalenbauteile Einfluß genommen. Als Beispiel sind in Fig. 1B mehrere Rumpfschalen 4 und eine Flügelschale 5 angedeutet, wobei deren Größen und Formen insbesondere in Abhängigkeit der Herstellungsmöglichkeiten und des Flugzeugtyps variieren können und hier nur der Illustration halber beispielhaft gezeigt sind. Die Figuren 1A und 1B machen deutlich, dass Rumpfschalen 4 und Flügelschalen 5 nicht nur in einer Richtung, sondern in mehreren Richtungen im Raum gekrümmt sein können. Mit anderen Worten, die Schalenbauteile 4, 5 können nicht nur zylindrisch, sondern auch sphärisch gekrümmt sein.

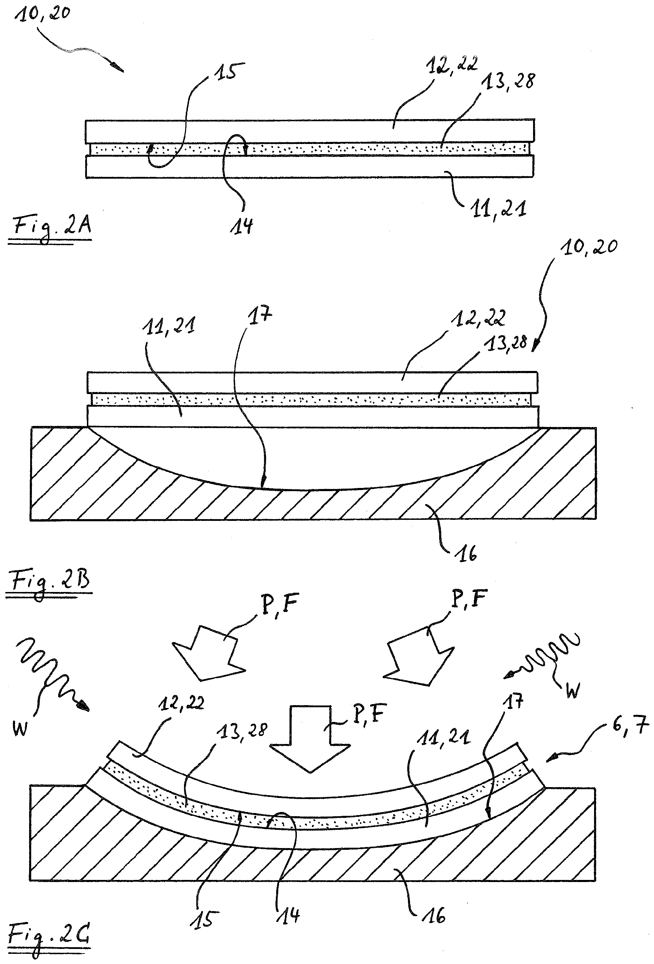

Die Figuren 2A bis 2C zeigen die Herstellung eines Strukturbauteils 6 und eines Halbzeugs 7 gemäß einem ersten Ausführungsbeispiel der Erfindung. Bei dem Strukturbauteil 6 kann es sich um eine Flügelschale 5 oder eine Rumpfschale 4 des Flugzeugs 1 handeln, jedoch auch um ein beliebiges anderes Strukturbauteil auf dem Gebiet der Luft- oder Raumfahrt oder auch auf anderen Gebieten der Technik, zum Beispiel der Kraftfahrzeugtechnik oder der Gebäudetechnik.

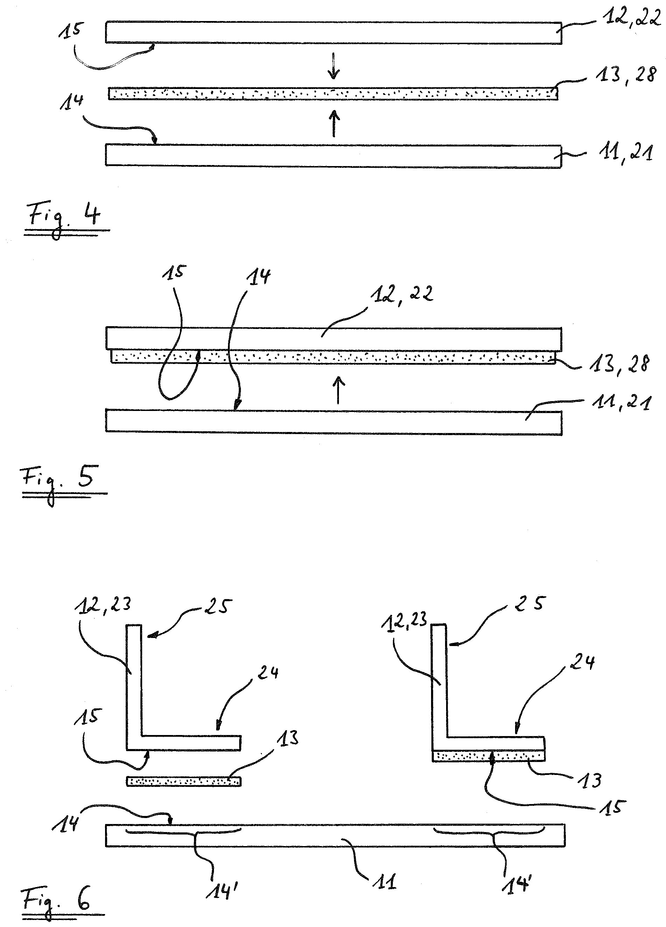

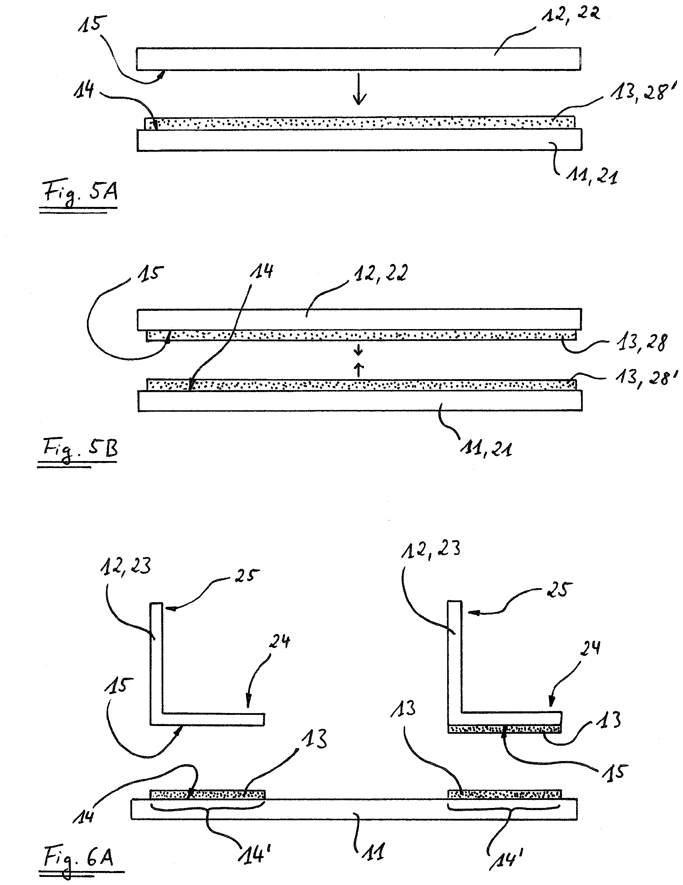

In Figur 2A ist eine Anordnung 10 dargestellt, die durch Anordnen einer zweiten Bauteilkomponente 12 auf einer ersten Bauteilkomponente 11 gebildet ist. Zwischen den beiden Bauteilkomponenten 11 und 12 ist eine Schicht 28 eines thermoplastischen Kunststoffmaterials 13 vorgesehen. Die Schicht 28 des thermoplastischen Kunststoffmaterials 13 ist in Figur 2A noch nicht mit beiden Bauteilkomponenten 11 und 12 verbunden, sondern kann, wie in Figur 4 illustriert, zum Bilden der Anordnung 10 in Gestalt eines Films oder einer Folie zwischen die erste Bauteilkomponente 11 und die zweite Bauteilkomponente 12 eingelegt werden. Alternativ hierzu kann das thermoplastische Kunststoffmaterial 13 auch als Beschichtung auf eine der Bauteilkomponenten 11, 12, beispielsweise auf eine untere Oberfläche 15 der zweiten Bauteilkomponente 12, wie in Figur 5 gezeigt, oder auf eine obere Oberfläche 14 der ersten Bauteilkomponente 11, wie in Figur 5A illustriert, aufgetragen sein, zum Beispiel durch thermisches Spritzen. Das thermoplastische Kunststoffmaterial 13 kann auch auf die einander zugewandten Oberflächen 14 und 15 beider Bauteilkomponenten 11, 12 als Beschichtung aufgetragen werden, wie in Figur 5B skizziert. Pfeile in den Figuren 4 sowie 5, 5A und 5B deuten an, wie nach dem Einlegen oder Beschichten die ersten und zweiten Bauteilkomponenten 11, 12 zum Bilden der Anordnung 10 aufeinandergesetzt werden.

Damit das thermoplastische Kunststoffmaterial 13 an der oberen Oberfläche 14 der ersten Bauteilkomponente 11 und an der unteren Oberfläche 15 der zweiten Bauteilkomponente 12 gut anhaftet, werden die Oberflächen 14 und 15 entweder vor dem Einlegen des Films zwischen die Bauteilkomponenten 11, 12 oder vor dem Beschichten einer der Bauteilkomponenten 11, 12 oder beider mit dem thermoplastischen Kunststoffmaterial 13 vorbehandelt, je nachdem, welche Variante gewählt wird. Die Vorbehandlung umfasst bei diesem Ausführungsbeispiel ein Reinigen und Entfetten der beiden Oberflächen 14 und 15 und anschließend ein Anodisieren (auch Eloxieren genannt) beider Oberflächen 14, 15. Daraufhin wird bevorzugt zusätzlich eine Grundierung (ein sogenannter Primer) auf die Oberflächen 14 und 15 aufgetragen. Während das Anodisieren bevorzugt wird, ist es auch vorstellbar, stattdessen die Oberflächen 14 und 15 jeweils vor dem Grundieren mit einem Umwandlungsüberzug oder mit einer Sol-Gel-Schicht zu versehen.

Nach dem Bilden der Anordnung 10 wird diese auf eine Form 16 aufgelegt, um die Anordnung 10 durch Aufbringen einer Kraft F und/oder eines Drucks P auf die Anordnung 10 mechanisch zu verformen. Eine Oberfläche 17 der Form 16 weist eine Oberflächengeometrie auf, die einer angestrebten Zielgeometrie des herzustellenden Strukturbauteils 6 in dessen fertigem Zustand im Wesentlichen entspricht. Wie Figur 2C zeigt, wird die Anordnung 10 durch die Kraft F und/oder den Druck P zunächst gegen die Oberfläche 17 gedrückt und dabei verformt. Die Kraft F und/oder der flächig einwirkende Druck P können in an sich bekannter Weise mittels eines Vakuumsacks, eines beweglichen Gegenstücks für die Form 16 oder in ähnlicher Weise aufgebracht werden. Um eine bleibende Verformung durch Kriechen des Materials der ersten und zweiten Bauteilkomponenten 11, 12 zu erzielen, wird die Anordnung 10 durch Zuführen von Wärme W auf Temperaturen bevorzugt im Bereich zwischen 275°C und 375°C, beispielsweise 325°C, erwärmt und diese Temperatur wird während einer vorgegebenen Zeitdauer, vorzugsweise zehn Minuten oder länger, beispielsweise etwa zwei Stunden, aufrechterhalten. Ein derartiges Umformen mittels einer Form 16 unter gleichzeitiger Einwirkung von mechanischer Kraft F oder flächig einwirkendem Druck P und Wärme W wird auch als Kriechumformen (in der englischsprachigen Terminologie "creep forming" genannt) bezeichnet. Danach kühlt die Anordnung 10 wieder ab und kann nach Wegnahme der Kräfte F und des Drucks P als fertiges Strukturbauteil 6 aus der Form 16 entnommen werden.

Bei dem gezeigten Ausführungsbeispiel sind die erste Bauteilkomponente 11 und die zweite Bauteilkomponente 12 aus einer Aluminium-Magnesium-Scandium-Legierung, mit ihrem Kurznamen auch als AlMgSc-Legierung bezeichnet, gefertigt. Das Zulegieren von Scandium trägt vorteilhaft dazu bei, dass die Bauteilkomponenten 11 und 12 je nach der Zusammensetzung der Legierung Temperaturen zum Beispiel im Bereich von 300°C bis 350°C ausgesetzt werden können, ohne dass die Legierung, aus welcher die Bauteilkomponenten 11 und 12 gefertigt sind, ihre günstigen mechanischen Eigenschaften verliert. Dies ist vorteilhaft, weil bei einem Erwärmen auf Temperaturen im Bereich von 275°C bis 375°C ein Relaxieren der durch die Einwirkung der mechanischen Kräfte F und/oder des Drucks P in den Bauteilkomponenten 11 und 12 hervorgerufenen mechanischen Spannungen eintritt. Dieses Relaxieren bewirkt, dass bei Wegnahme der Kräfte F und/oder des Drucks P kein Zurückfedern oder "Spring back" der Anordnung 10 eintritt. Die ersten und zweiten Bauteilkomponenten 11, 12 werden somit durch das Kriechumformen in die angestrebte Zielgeometrie des Strukturbauteils 6 gebracht, die Oberfläche 17 der Form 16 kann mit dieser Zielgeometrie ausgebildet werden, ohne dass ein "Spring back" zu berücksichtigen ist. Auf aufwendige Versuche oder Simulationen zur Ermittlung der Oberflächengeometrie der Form 16 kann somit verzichtet werden.

In dem genannten Temperaturbereich kann das thermoplastische Kunststoffmaterial 13, welches sich als Schicht zwischen den Bauteilkomponenten 11 und 12 erstreckt, teilweise oder, wenn gewünscht, auch vollständig schmelzen. Der aufgeschmolzene Anteil des thermoplastischen Kunststoffmaterials 13 kann sich an die Oberflächen 14 und 15 der Bauteilkomponenten 11, 12 anlegen. Durch Abkühlen erstarrt das thermoplastische Kunststoffmaterial 13 wieder und verbindet dadurch die erste Bauteilkomponente 11 und die zweite Bauteilkomponente 12 durch Haftung fest und dauerhaft miteinander, wodurch diese das Strukturbauteil 6 bilden. Die bereits beschriebene Vorbehandlung der Oberflächen 14, 15 verbessert das Anhaften des thermoplastischen Kunststoffmaterials auf diesen Oberflächen und damit die Verbindung der Bauteilkomponenten 11, 12.

Somit wird in ein und demselben Arbeitsgang ein dauerhaftes und zuverlässiges Verbinden und gleichzeitig ein Umformen der Bauteilkomponenten 11 und 12 in ihre angestrebte Endform erreicht. Nach dem Abkühlen kann das fertige Strukturbauteil 6 aus der Form 16 entnommen werden. Ein getrenntes Umformen der ersten und zweiten Bauteilkomponenten 11, 12 und ein nachfolgendes Befestigen dieser aneinander in einem weiteren separaten Arbeitsgang entfällt.

Zur Verbesserung der mechanischen Eigenschaften des fertigen Strukturbauteils 6 können in den Figuren nicht dargestellte Verstärkungsfasern in das thermoplastische Kunststoffmaterial 13 eingebettet werden. Als Fasern können beispielsweise Glasfasern, Kohlefasern, Zylonfasern oder Kombinationen dieser gewählt werden. Die Verstärkungsfasern können auch in mehreren Schichten paralleler Fasern mit unterschiedlichen Verlaufsrichtungen angeordnet sein und insbesondere bereits vor dem Kriechumformen in dem thermoplastischen Kunststoffmaterial 13 eingebettet sein, zum Beispiel in dem zwischen die Bauteilkomponenten 11, 12 eingelegten Film gemäß Figur 4 oder in der Beschichtung gemäß einer der Figuren 5, 5A oder 5B.

Die Figuren 2A bis 2C illustrieren auch die Herstellung eines Halbzeugs 7, welches für die Herstellung eines Strukturbauteils für die Luft- oder Raumfahrt durch Kriechumformen des Halbzeugs 7 Anwendung finden kann. Die ersten und zweiten Bauteilkomponenten 11 und 12 bilden eine erste Lage 21 und eine zweite Lage 22 eines Stapels 20. Die Lagen 21, 22 sind beide als Folien oder dünne Bleche aus einer AlMgSc-Legierung hergestellt, die Stärke der Lagen kann beispielsweise 0,2 mm bis 6,0 mm, bevorzugt 0,8 mm bis 3,8 mm, und weiter bevorzugt 0,8 mm bis 2,0 mm betragen. Zwischen den übereinander gelegten Lagen 21, 22 ist das thermoplastische Kunststoffmaterial 13 als Schicht 28 angeordnet, entweder als dazwischen eingelegter Film oder als Beschichtung einer der Lagen 21, 22, wie zu den Figuren 5, 5A und 5B erläutert. Durch Zufuhr von Wärme W wird der Stapel 20 erwärmt, wodurch das thermoplastische Kunststoffmaterial 13 teilweise oder vollständig aufschmilzt und die beiden Lagen 21 und 22 verbindet. Dabei können die Lagen 21, 22, wie in Figur 2C gezeigt, bereits durch Kriechumformen in eine gekrümmte Form gebracht werden. Alternativ hierzu kann die Oberfläche 17 zur Herstellung des Halbzeugs 7 auch eben sein, wobei dann ein ebenes, flächiges Halbzeug 7 hergestellt wird, welches in einem weiteren Verarbeitungsschritt auch erneut bis zum Erweichen oder Aufschmelzen des thermoplastischen Kunststoffmaterials 13 erwärmt und kriechumgeformt werden kann. Auch bei der Herstellung des Halbzeugs 7 können Verstärkungsfasern in das thermoplastische Kunststoffmaterial 13 eingebettet werden, wie für das Strukturbauteil 6 der Fig. 2C beschrieben. Die Verstärkungsfasern können im Wesentlichen parallel entlang einer Richtung verlaufen, oder es können in an sich bekannter Weise mehrere Schichten von Verstärkungsfasern vorgesehen werden, in welchen die Fasern sich entlang unterschiedlicher, zueinander um vorbestimmte Winkel versetzt verlaufender Richtungen erstrecken. Dies ermöglicht die Herstellung eines als Faser-Metall-Laminat (FML) ausgebildeten Halbzeugs 7. Die Oberflächen 14 und 15 der Lagen 21, 22 werden auch bei dem Halbzeug 7 vor dem Bilden des Stapels 20 in gleicher Weise vorbehandelt, wie vorstehend zu dem Strukturbauteil 6 des ersten Ausführungsbeispiels dargelegt.

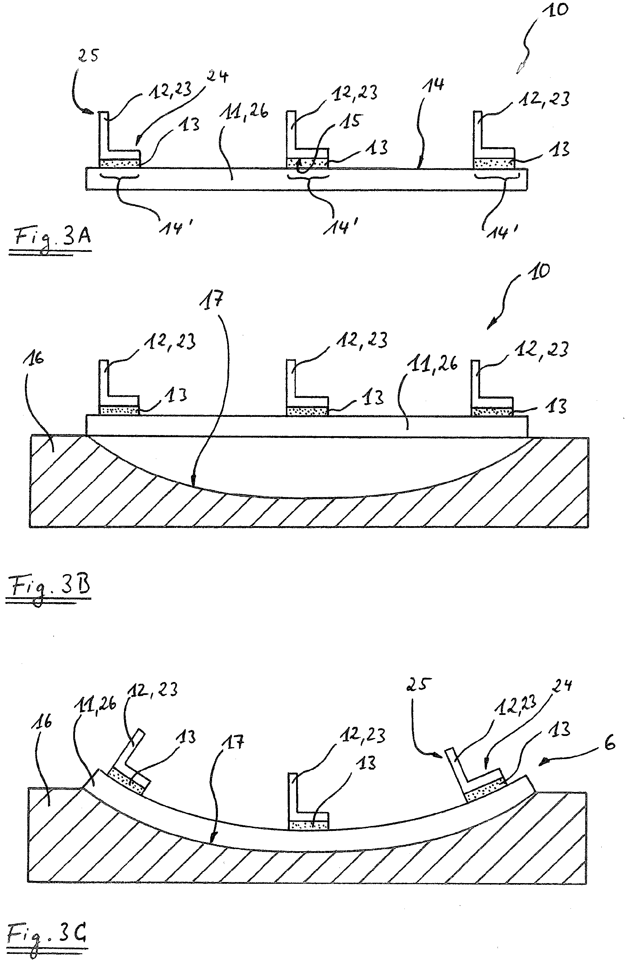

Die Herstellung eines als Rumpfschale 4 ausgebildeten Strukturbauteils 6 gemäß einem zweiten veranschaulichenden Beispiel zeigen die Figuren 3A bis 3C. Während eine erste Bauteilkomponente 11 vorgesehen ist, welche als eine dünnwandige Schalenhaut 26 für die Rumpfschale 4 ausgebildet ist, werden als zweite Bauteilkomponenten 12 mehrere Versteifungselemente bereitgestellt, die als Stringer 23 zur Versteifung der Schalenhaut 26 ausgebildet sind und bei dem gezeigten Beispiel etwa senkrecht zur Zeichenebene verlaufen. Die ersten und die zweiten Bauteilkomponenten 11 und 12 bilden wiederum eine Anordnung 10. Die Stringer 23 der Figuren 3A bis 3C weisen ein L-Profil mit einem als Stringerfuß dienenden ersten Schenkel 24 und einem bei diesem Beispiel in etwa senkrecht zu dem ersten Schenkel 24 verlaufenden zweiten Schenkel 25 auf, wobei auch Stringer 23 mit einem anderen Profil, zum Beispiel mit einem Z-Profil oder mit einem Omega-Profil, verwendet werden können. Zwischen den Stringern 33 und der oberen Oberfläche 14 der Schalenhaut 26 ist wiederum jeweils eine Schicht eines thermoplastischen Kunststoffmaterials 13 vorgesehen.

Figur 6 zeigt zwei Möglichkeiten, das thermoplastische Kunststoffmaterial 13 für die Herstellung des Strukturbauteils 6 gemäß dem zweiten veranschaulichenden Beispiel bereitzustellen, entweder als Film oder Folie, welcher/welche zwischen den ersten Schenkel 24 und die Schalenhaut 26 eingelegt wird, oder als Beschichtung einer unteren Oberfläche 15 des ersten Schenkels 24 des Stringers 23, zum Beispiel durch thermisches Spritzen des thermoplastischen Kunststoffmaterials 13 auf die untere Oberfläche 15 des Stringerfußes. Wie in Figur 6A skizziert, kann auch ein Oberflächenabschnitt 14' der oberen Oberfläche 14 der Schalenhaut 26 zusätzlich oder alternativ zu der unteren Oberfläche 15 des ersten Schenkels 24 des Stringers 23 mit dem thermoplastischen Kunststoffmaterial 13 beschichtet werden. Um auch hier ein gutes Anhaften des thermoplastischen Kunststoffmaterials 13 an den ersten und zweiten Bauteilkomponenten 11 und 12, in den Figuren 6 und 6A an der Schalenhaut 26 und an dem Stringer 23, zu gewährleisten, werden die obere Oberfläche 14 oder zumindest die Oberflächenabschnitte 14' der oberen Oberfläche 14 der Schalenhaut 26 und die untere Oberfläche 15 des Stringers 23 in gleicher Weise vorbehandelt, wie vorstehend zu den Figuren 4, 5, 5A und 5B bereits beschrieben.

Bei der in den Figuren 3A bis 3C gezeigten Herstellung eines durch Stringer 23 versteiften Strukturbauteils 6 verlaufen die als Stringer 23 ausgebildeten zweiten Bauteilkomponenten 12 im Wesentlichen quer zu der Richtung, in der das Strukturbauteil 6 in seinem fertigen Zustand vornehmlich gekrümmt sein wird, und werden daher selbst nicht oder näherungsweise nicht verformt. Wie Figur 3C zeigt, werden sie aber bei dem Kriechumformen der Schalenhaut 26 mit dieser durch Aufschmelzen und Wiederverfestigen des thermoplastischen Kunststoffmaterials 13 zuverlässig verbunden. Auch bei dem zweiten veranschaulichenden Beispiel der Figuren 3A bis 3C können Verstärkungsfasern, wie Glasfasern, Kohlefasern oder Zylonfasern, in das thermoplastische Kunststoffmaterial 13 eingebettet werden. Die Stringer 23 und die Schalenhaut 26 des zweiten veranschaulichenden Beispiels sind bevorzugt aus einer AlMgSc-Legierung gefertigt. Für die erste Bauteilkomponente 11, welche die Schalenhaut 26 bildet, kommt insbesondere ein vor dem Kriechumformen ebenes Blech mit einer Stärke im Bereich von 0,8 mm bis 6,0 mm, bevorzugt 0,8 mm bis 3,8 mm und weiter bevorzugt 0,8 mm bis 2,0 mm in Betracht.

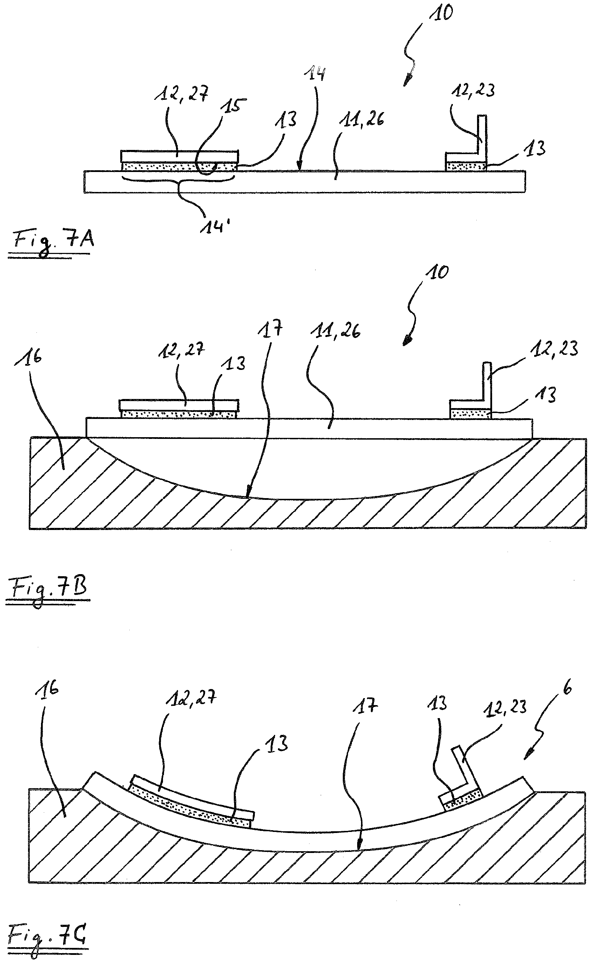

In den Figuren 7A bis 7C ist ein drittes veranschaulichendes Beispiel dargestellt. Gezeigt ist eine Anordnung 10 einer ersten Bauteilkomponente 11, die wiederum als Schalenhaut 26 für ein Strukturbauteil 6 ausgebildet ist. In ähnlicher Weise wie in Figur 3A umfasst die Anordnung 10 eine als Stringer 23 ausgebildete zweite Bauteilkomponente 12. Eine weitere zweite Bauteilkomponente 12 ist bei dem dritten veranschaulichenden Beispiel als ein Doppler 27 zur lokalen Verstärkung der Schalenhaut 26 ausgeführt. Zwischen dem Doppler 27 und der Schalenhaut 26 und zwischen dem Stringer 23 und der Schalenhaut 26 ist wiederum jeweils eine Schicht eines thermoplastischen Kunststoffmaterials 13 angeordnet. In Figur 7A sind der Doppler 27 und der Stringer 23 auf die Schalenhaut 26 vorerst lose aufgelegt. Sie können für das nachfolgende Kriechumformen und Verbinden durch Aufschmelzen des thermoplastischen Kunststoffmaterials 13 durch geeignete Mittel wie Stifte und dergleichen, die hier der Übersicht halber nicht gezeigt sind, zeitweise fixiert werden. Diese Mittel werden nach dem Abkühlen des fertigen Strukturbauteils 6 und dem Verfestigen des thermoplastischen Materials 13 wieder entfernt.

Wie die Figuren 7B und 7C zeigen, wird die Anordnung 10 des dritten veranschaulichenden Beispiels wie bei dem ersten Ausführungsbeispiel unter Erwärmung kriechumgeformt. Durch teilweises Aufschmelzen des thermoplastischen Kunststoffmaterials 13 und nachfolgendes Erstarren werden der Stringer 23 und der Doppler 27 mit der Schalenhaut 26 verbunden, wodurch das Strukturbauteil 6 gebildet ist. Während des Kriechumformens wird auch bei dem dritten veranschaulichenden Beispiel eine Temperatur zwischen 275°C und 375°C erreicht und für eine Dauer von mehr als zehn Minuten, beispielsweise zwei Stunden, gehalten. Auch der Doppler 27 und der Stringer 23 der Figuren 7A-C sind bevorzugt aus einer AlMgSc-Legierung ausgeführt.

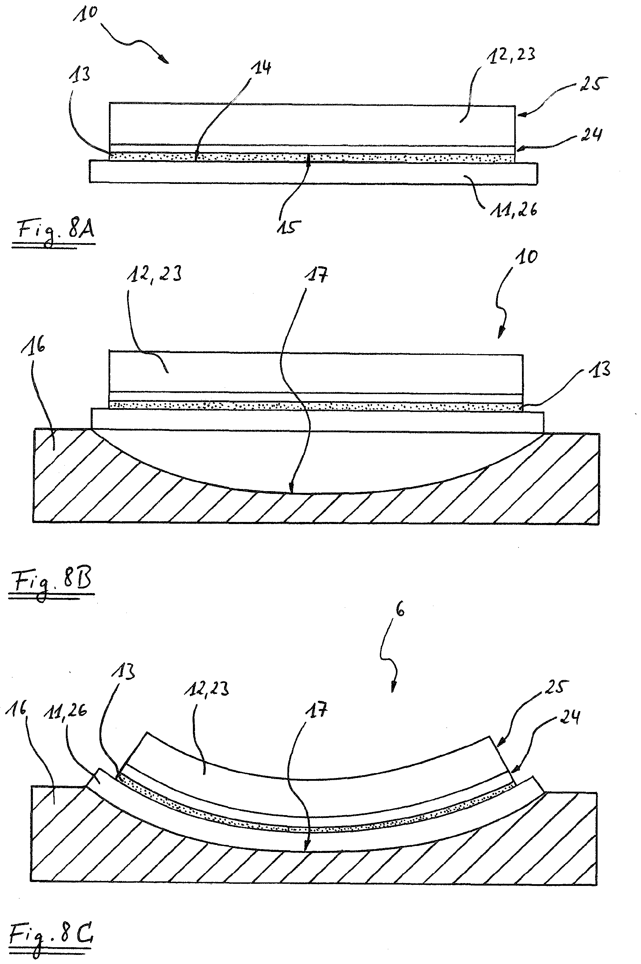

Bei einem vierten veranschaulichenden Beispiel der Erfindung gemäß den Figuren 8A bis 8C ist ein Stringer 23 als Versteifungselement für eine Schalenhaut 26 gezeigt, welcher nun im Wesentlichen entlang der angestrebten Hauptkrümmungsrichtung der Schalenhaut 26 verläuft. Der Stringer 23 ist bei diesem Beispiel wieder mit einem L-Querschnitt mit einem ersten Schenkel 24 und einem zweiten Schenkel 25 versehen. Bei dem Kriechumformen wird auch der Stringer 23 umgeformt und zugleich mit der Schalenhaut 26 durch eine Schicht eines thermoplastischen Kunststoffmaterials 13, wie zu den vorherigen veranschaulichenden Beispielen und Ausführungsbeispielen dargelegt, verbunden. Vorzugsweise sind hierbei der Stringer 23 und die Schalenhaut 26 wiederum aus einer AlMgSc-Legierung gefertigt. Es kann in diesem Fall zweckmäßig sein, für den Stringer 23 und die Schalenhaut 26 dieselbe AlMgSc-Legierung zu wählen, es können für diese Bauteilkomponenten aber auch unterschiedliche Legierungen dieser Legierungsfamilie vorgesehen werden.

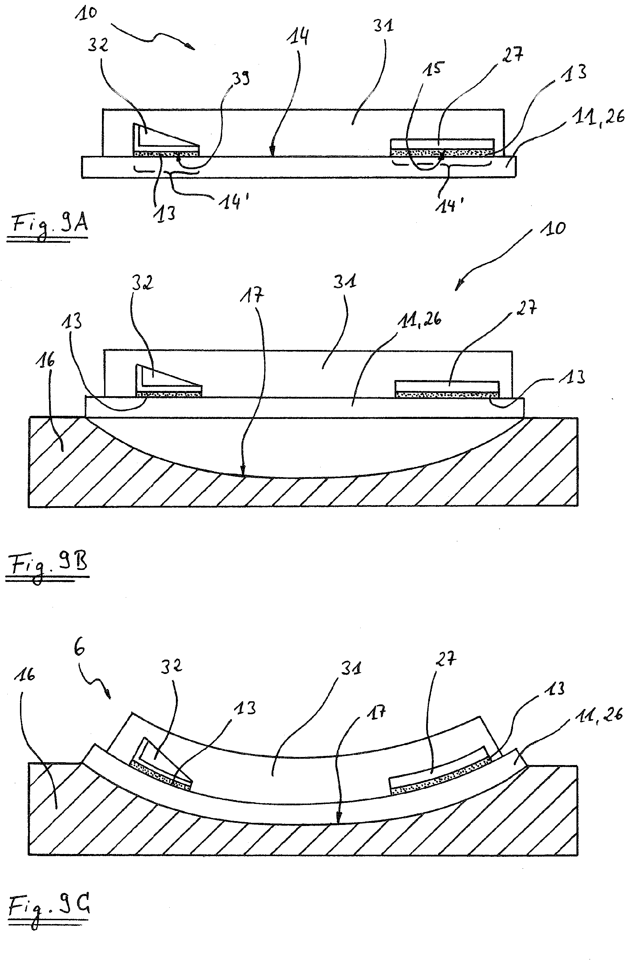

Gemäß einem fünften veranschaulichenden Beispiel, wie es in den Figuren 9A bis 9C illustriert ist, können vor dem Bilden einer Anordnung 10 zunächst eine oder mehrere dritte Bauteilkomponenten 31 mit einer ersten Bauteilkomponente 11 auf andere Weise als mittels eines thermoplastischen Kunststoffmaterials verbunden werden. Die erste Bauteilkomponente 11 der Figur 9A ist als ein im Wesentlichen ebenes Blech aus einer AlMgSc-Legierung ausgebildet, wobei die Dicke des Bleches beispielsweise zwischen 0,8 mm und 6,0 mm, bevorzugt 0,8 mm bis 3,8 mm, und weiter bevorzugt 0,8 mm bis 2,0 mm beträgt. Im fertigen Strukturbauteil 6 bildet die erste Bauteilkomponente 11 eine Schalenhaut 26. In Figur 9A ist nur eine dritte Bauteilkomponente 31 gezeigt und bei diesem Beispiel als ein Stringer ausgebildet, welcher mit seiner Längsrichtung im Wesentlichen parallel zur Zeichenebene verläuft. Der Stringer dient im Strukturbauteil 6 der Versteifung der Schalenhaut 26 und ist in Figur 9A bereits mit der ersten Bauteilkomponente 11 verschweißt. Das Verschweißen kann beispielsweise mittels eines Laserstrahlschweißverfahrens erfolgen. Bevorzugt ist auch die dritte Bauteilkomponente 31 aus einer AlMgSc-Legierung gefertigt. Ferner beinhaltet die Anordnung 10 gemäß dem Beispiel der Figur 9A-C zusätzlich zu den bereits verbundenen ersten und dritten Bauteilkomponenten 11, 31 zwei zweite Bauteilkomponenten 12, von welchen eine als ein in Fig. 9A beispielhaft skizziertes lokales Versteifungselement 32 und die andere als ein Doppler 27 zur lokalen Verstärkung der Schalenhaut 26 ausgebildet ist. Auch bei diesem Beispiel ist zwischen einer unteren Oberfläche 15 des Dopplers 27 und einer oberen Oberfläche 14 der ersten Bauteilkomponente 11 sowie zwischen dem lokalen Versteifungselement 32 und der oberen Oberfläche 14 der ersten Bauteilkomponente 11 eine Schicht eines thermoplastischen Kunststoffmaterials 13 angeordnet. Die Anordnung 10 der Figur 9A wird in Figur 9B auf einer Form 16 platziert und unter der Einwirkung von Druck und Wärme einer Kriechumformung unterzogen. Dabei werden die erste und dritte Bauteilkomponente 11 und 31, mit anderen Worten, die Schalenhaut 26 und der mit dieser verschweißte Stringer, umgeformt. Zugleich sind nach dem Kriechumformen das lokale Versteifungselement 32 und der Doppler 27 mit der Schalenhaut 26 fest verbunden. Das Strukturbauteil 6 kann nach dem Abkühlen als fertiges Bauteil aus der Form 16 entnommen werden. Das lokale Versteifungselement 32 kann auch als ein Rahmen für ein Fenster eines Luftfahrzeugs ausgebildet sein und bei der Kriechumformung mit umgeformt werden. Anstelle des lokalen Versteifungselements 32 könnte auch ein Befestigungselement, zum Beispiel ein hier nicht dargestellter Beschlag aus Titan oder aus Stahl, mittels der Schicht des thermoplastischen Kunststoffmaterials 13 mit der Schalenhaut 26 verbunden werden.

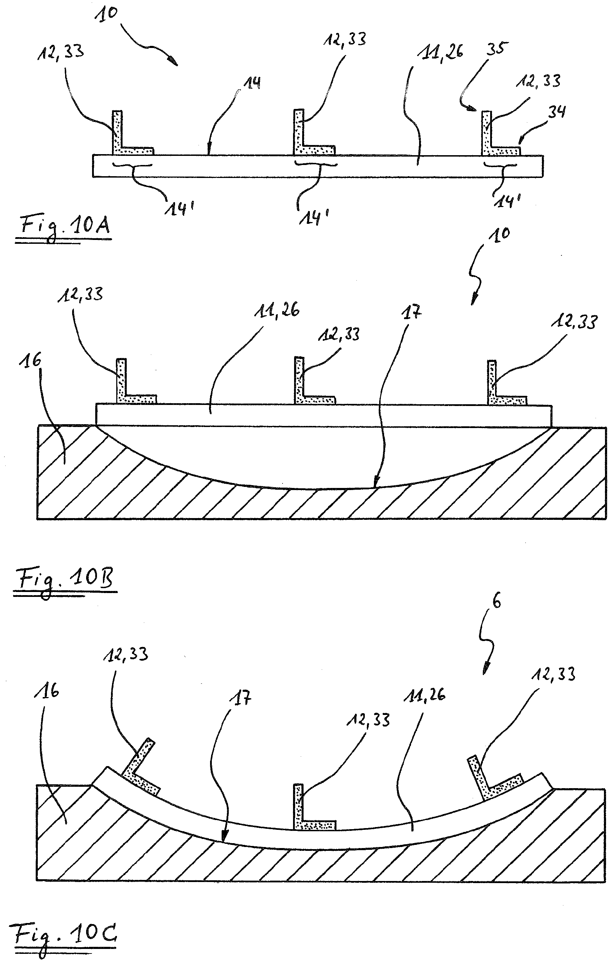

Gemäß einem sechsten veranschaulichenden Beispiel, welches in den Figuren 10A bis 10C gezeigt ist, wird die zweite Bauteilkomponente 12 als eine Verbundkomponente mit einer Matrix aus einem thermoplastischen Kunststoffmaterial ausgebildet. Vorzugsweise sind in die Matrix der zweiten Bauteilkomponente 12, die in den Figuren 10A bis 10C als Stringer 33 zur Versteifung einer Schalenhaut 26 dargestellt ist, Verstärkungsfasern eingebettet. Hierfür können insbesondere Glasfasern, Kohlefasern oder Zylonfasern oder eine Kombination dieser gewählt werden. Vorzugsweise werden die Stringer 33 als Verbundkomponenten bereits vor dem Anordnen auf der ersten Bauteilkomponente 11 durch Einbetten der Fasern in die thermoplastische Matrix hergestellt. Wie die Figuren 10B und 10C verdeutlichen, bilden die Stringer 33 zusammen mit der ersten Bauteilkomponente 11, die hier wiederum als ein vergleichsweise dünnes Blech aus einer AlMgSc-Legierung ausgebildet ist, beispielsweise mit einer Stärke in einem Bereich von 0,8 mm bis 3,8 mm, und die eine Schalenhaut 26 bilden soll, eine Anordnung 10. Die Stringer 33 sind auch bei diesem Beispiel mit einem L-förmigen Querschnitt ausgestattet, wobei ein erster Schenkel 34 beim Bilden der Anordnung 10 auf der ersten Bauteilkomponente 11 zur Auflage gelangt und ein zweiter Schenkel 35 von der ersten Bauteilkomponente 11 abragt. Wie bei den vorherigen veranschaulichenden Beispielen und Ausführungsbeispielen wird die Anordnung 10 einem Kriechumformen unterworfen. Dabei wird die erste Bauteilkomponente 11 umgeformt. Die Temperatur bei der Kriechumformung ist in der Weise gewählt, dass die thermoplastische Matrix der Stringer 33 für ein Verbinden mit der ersten Bauteilkomponente 11 zumindest teilweise aufschmilzt. Vorteilhaft wird ein vollständiges Schmelzen der Stringer 33 durch geeignete Wahl der Temperatur und deren zeitlichen Verlaufs vermieden. Um zu gewährleisten, dass die Stringer 33 ihre Querschnittsform bei der Kriechumformung im Wesentlichen beibehalten und dennoch zuverlässig mit der Schalenhaut 26 verbunden werden, können in den Figuren 10A bis 10C nicht gezeigte Vorrichtungen vorgesehen sein. Bevorzugt erfolgt auch bei diesem Beispiel eine Vorbehandlung von Oberflächenabschnitten 14' der oberen Oberfläche 14 der Schalenhaut 26 in der vorstehend bereits beschriebenen Weise, um das Anhaften des thermoplastischen Kunststoffmaterials an der Schalenhaut 26 zu verbessern.

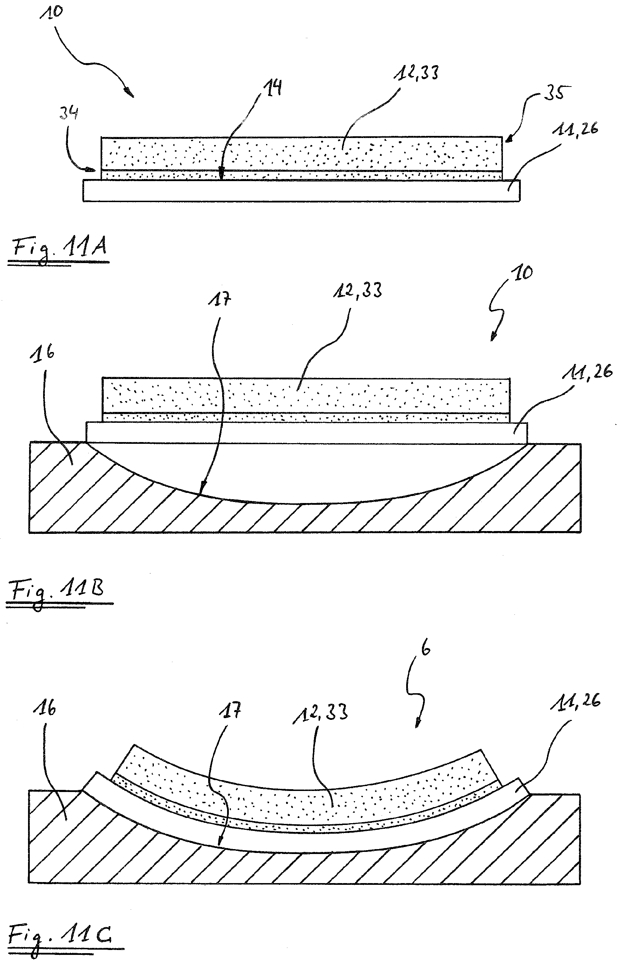

Das siebte veranschaulichende Beispiel, wie es in den Figuren 11A bis 11B skizziert ist, unterscheidet sich von dem sechsten veranschaulichenden Beispiel der Fig. 10A-C lediglich durch die Ausrichtung der Längsrichtung der Stringer 33, von welchen in den Figuren 11A bis 11C nur einer sichtbar ist. Bei dem siebten veranschaulichenden Beispiel wird der Stringer 33 entlang der Hauptkrümmungsrichtung der Schalenhaut 26 beim Kriechumformen ebenfalls verformt und zugleich mit der Schalenhaut 26 verbunden.

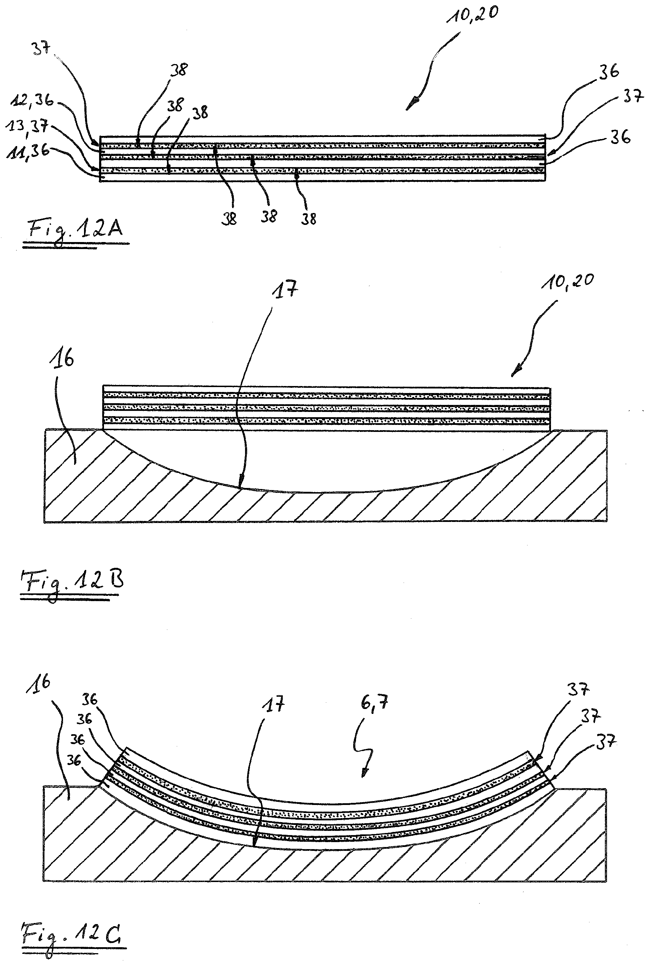

Gemäß dem achten Ausführungsbeispiel der Erfindung wird ein Strukturbauteil 6 oder ein Halbzeug 7 als ein Faser-Metall-Laminat (FML) mit mehreren Lagen 36 eines durch Kriechumformen umformbaren Materials und mehreren, jeweils zwischen zwei Lagen 36 angeordneten Schichten 37 eines thermoplastischen Kunststoffmaterials 13 hergestellt, wie in den Figuren 12A bis 12C illustriert. Bevorzugt sind die Lagen 36 als Folien oder dünne Bleche aus einer AlMgSc-Legierung ausgebildet und weisen vorzugsweise Dicken im Bereich von 0,2 mm bis 6,0 mm und bevorzugt im Bereich von 0,2 mm bis 1,0 mm auf. Die Lagen 36 und Schichten 37 werden übereinander angeordnet und bilden eine Anordnung 10, die auch als ein Stapel 20 bezeichnet werden kann. Bei diesem Ausführungsbeispiel kann eine der Lagen 36 als eine erste Bauteilkomponente 11, eine benachbarte Lage 36 als eine zweite Bauteilkomponente 12 und die anderen Lagen 36 als weitere Bauteilkomponenten angesehen werden. Zur Bildung eines Strukturbauteils 6 oder eines Halbzeugs 7 wird die Anordnung 10 bzw. der Stapel 20 in eine Form 16 gelegt und unter Einsatz von Kraft und/oder Druck sowie Wärme kriechumgeformt. Die Temperatur bei dem Kriechumformen ist in der Weise gewählt, dass die einzelnen Lagen 36 durch wenigstens teilweises Aufschmelzen des thermoplastischen Kunststoffmaterials 13 in den Schichten 37 miteinander verbunden werden, und liegt bevorzugt zwischen 275°C und 375°C. Auch bei dem achten Ausführungsbeispiel kann sich die bereits beschriebene Oberflächenvorbehandlung in Bezug auf die Oberflächen der Lagen 36 als zweckmäßig erweisen. Ferner kann die in den Figuren 12B und 12C gezeigte Oberfläche 17 der Form 16 auch eben sein, wodurch ohne Umformen ein ebenes Halbzeug 7 mit verbundenen Lagen 36 erzeugt werden kann. Dieses kann in einem weiteren Schritt auch nochmals durch Kriechumformen in der vorstehend beschriebenen Weise umgeformt werden. In das thermoplastische Kunststoffmaterial 13 einiger oder aller Schichten 37 können ebenfalls Verstärkungsfasern eingebettet sein, wie zu den Figuren 2A-C ausgeführt.

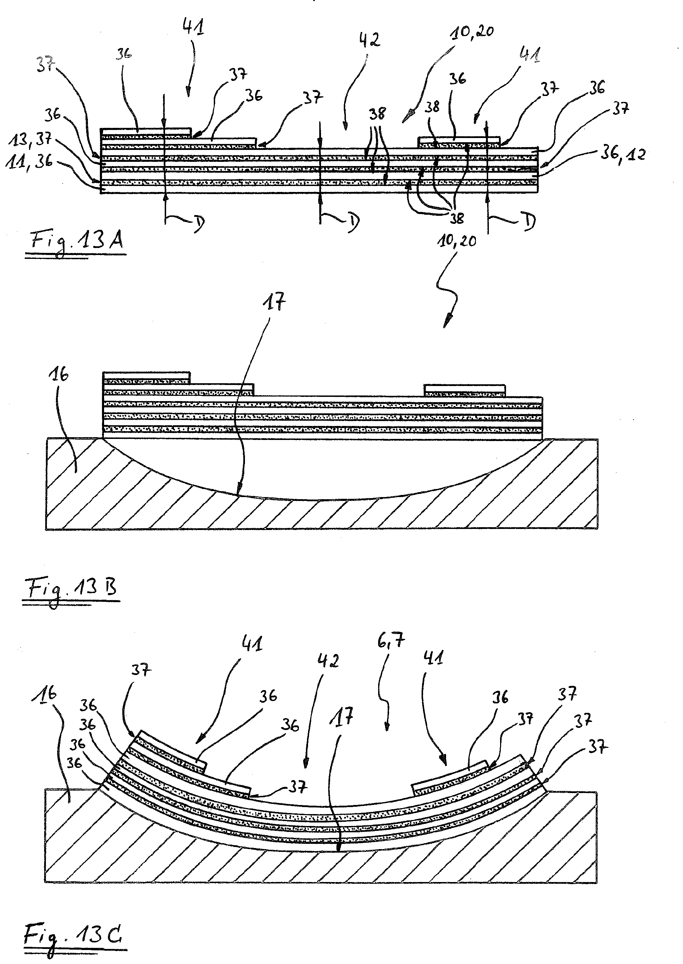

Wie das neunte Ausführungsbeispiel der Figuren 13A bis 13C zeigt, kann ein derartiges Strukturbauteil 6 oder Halbzeug 7 auch in der Weise hergestellt werden, dass es in verschiedenen Bereichen 41, 42 eine unterschiedliche Dicke D aufweist. Darüber hinausgehend unterscheidet sich das neunte Ausführungsbeispiel nicht von dem achten Ausführungsbeispiel. Dies kann dadurch erreicht werden, dass in einigen Bereichen 41 mehr, in anderen Bereichen 42 weniger Lagen 36 und entsprechend mehr oder weniger Schichten 37 des thermoplastischen Kunststoffmaterials 13 vorgesehen werden.

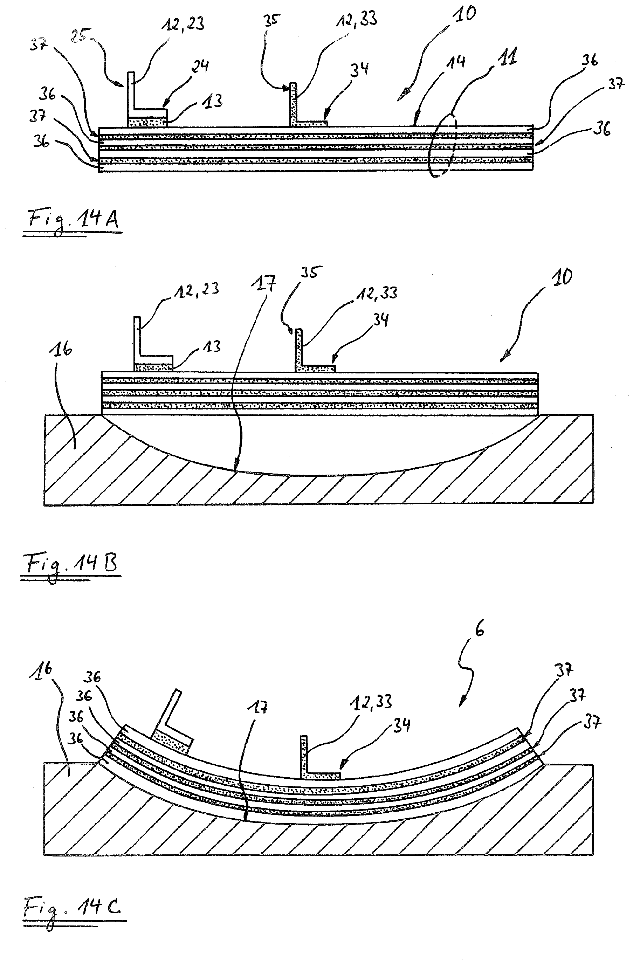

Bei dem zehnten Ausführungsbeispiel gemäß den Figuren 14A bis 14C wird zur Bildung eines Strukturbauteils 6 eine erste Bauteilkomponente 11 vorgesehen, welche aus einem Halbzeug 7, wie es vorstehend zu den Figuren 12A bis 12C oder 13A bis 13C beschrieben wurde, gefertigt ist. Zum Beispiel kann die erste Bauteilkomponente 11 der Figur 14A aus einem ebenen Halbzeug 7 mit mehreren Lagen 36 eines kriechumformbaren Materials wie einer AlMgSc-Legierung und Schichten 37 eines thermoplastischen Kunststoffmaterials 13 zugeschnitten werden. Mit weiteren, zweiten Bauteilkomponenten 12 bildet die erste Bauteilkomponente 11 in Figur 14A eine Anordnung 10. In Figur 14A sind beispielhaft ein Stringer 23 aus einer AlMgSc-Legierung und ein als Verbundkomponente ausgebildeter Stringer 33 gezeigt. Zwischen dem Stringer 23 und der ersten Bauteilkomponente 11 ist wie in Figur 3A eine Schicht eines thermoplastischen Kunststoffmaterials 13 angeordnet. Die Matrix des Stringers 33 ist ebenfalls aus einem thermoplastischen Kunststoffmaterial ausgebildet, wobei sich dieses von dem thermoplastischen Kunststoffmaterial 13 zwischen dem Stringer 23 und der ersten Bauteilkomponente 11 in der Zusammensetzung auch unterscheiden kann. Auch das thermoplastische Kunststoffmaterial in den Schichten 37 des Halbzeugs kann sich von den thermoplastischen Kunststoffmaterialien in der Matrix des Stringers 33 sowie zwischen dem Stringer 23 und der ersten Bauteilkomponente 11 unterscheiden. Zur Herstellung des Strukturbauteils 6 wird die Anordnung 10 unter der Einwirkung von Druck und Wärme kriechumgeformt, wobei das thermoplastische Kunststoffmaterial 13, die Matrix des Stringers 33 und die Schichten 37 teilweise aufschmelzen und beim Abkühlen und Erstarren das Verbinden aller Komponenten zur Bildung des Strukturbauteils 6, beispielsweise einer Rumpfschale 4, ermöglichen. Bei diesem zehnten Ausführungsbeispiel können die Lagen 36 des Halbzeugs, aus dem die erste Bauteilkomponente 11 hergestellt ist, bereits mittels der Schichten 37 verbunden sein. Die Lagen 36 können aber auch in dem Zustand der Figur 14A noch lose und unverbunden übereinander liegen, wobei das thermoplastische Kunststoffmaterial für die Schichten 37 wie zu den Figuren 4 und 5 beschrieben bereitgestellt werden kann.

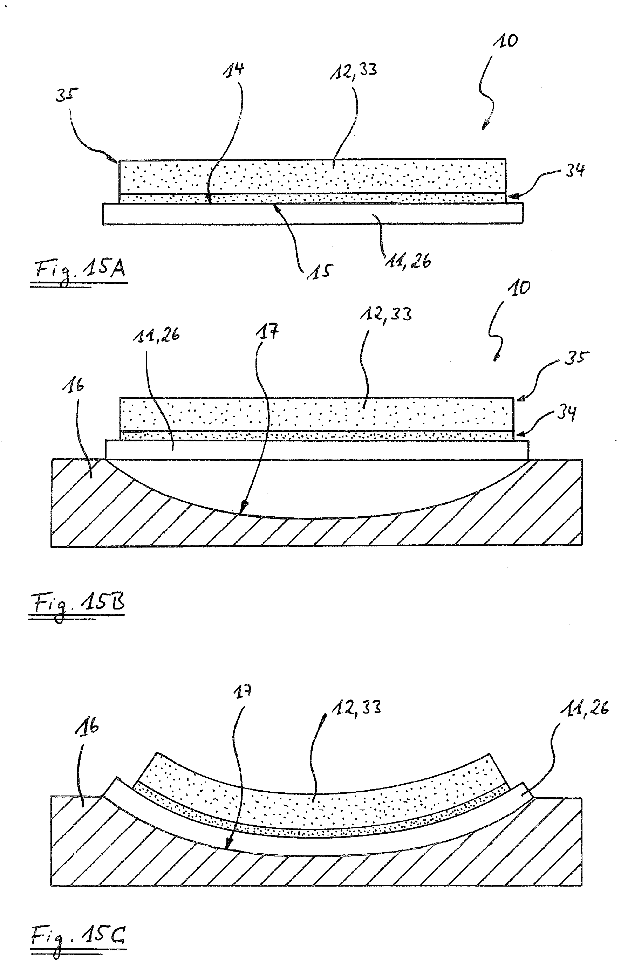

Ein elftes Beispiel eines Verfahrens zur Herstellung eines Strukturbauteils 6, insbesondere eines versteiften Schalenbauteils 4, 5 für ein Luftfahrzeug 1, soll anhand der Figuren 15A bis 15F erläutert werden. Auch bei diesem Beispiel werden eine als eine Schalenhaut 26 ausgebildete erste Bauteilkomponente 11 und eine als Stringer 33 ausgebildete zweite Bauteilkomponente 12 bereitgestellt. Der Stringer 33 wird als Verbundkomponente gefertigt, wobei in eine Matrix aus thermoplastischem Kunststoffmaterial Verstärkungsfasern, insbesondere Glasfasern, Kohlefasern oder Zylonfasern, eingebettet werden. Auch bei diesem Beispiel können die Fasern entlang mehrerer Richtungen bezüglich der Längsrichtung des Stringers 33 innerhalb der Matrix verlaufen, um die auf den Stringer 33 im fertigen Strukturbauteil 6 einwirkenden Lasten in vorteilhafter Weise aufzunehmen. Wie Figur 15A zeigt, wird der Stringer 33 auf der Schalenhaut 26 angeordnet, wodurch wiederum eine Anordnung 10 gebildet wird. Die Anordnung 10 wird auf eine Form 16 aufgesetzt, wobei die Oberfläche 17 der Form mit einer Geometrie versehen ist, die einer Oberflächengeometrie des herzustellenden Bauteils in dessen fertigem Zustand im Wesentlichen entspricht. Die Schalenhaut 26 ist aus einer AlMgSc-Legierung und mit einer Stärke im Bereich von 0,8 mm bis etwa 6 mm ausgeführt.

In dem in Figur 15C gezeigten Verfahrensschritt gemäß dem elften Beispiel wird die Anordnung 10 unter der Einwirkung von Wärme und Druck und/oder mechanischen Kräften verformt, bis die erste Bauteilkomponente 11 an der Oberfläche 17 der Form 16 anliegt. Dies erfolgt wiederum in einem Ofen oder Autoklaven bei einer Temperatur zwischen 275°C und 375°C, beispielsweise bei 320°C oder 350°C. Die Temperatur wird für einen vorbestimmten Zeitraum, bevorzugt mehr als zehn Minuten lang, aufrechterhalten. Hierbei kommt es zu einem Kriechen der Schalenhaut 26 aus Metall, wodurch diese kriechumgeformt wird. Wiederum bewirkt die Kombination von Umformtemperatur und Materialwahl, dass nach dem Umformvorgang im Wesentlichen kein "Spring back" auftritt.

Bei dem elften Beispiel werden ferner das thermoplastische Kunststoffmaterial der Matrix des Stringers 33 und die Temperatur, bei der das Kriechumformen erfolgt, in der Weise gewählt, dass die Matrix des Stringers 33 während des Umformens nicht aufgeschmolzen wird. Der Stringer 33 wird stattdessen bei diesem Beispiel durch maßvolles Erweichen verformbar und kann dabei gemeinsam mit der Schalenhaut 26 während des Kriechumformens dieser in die gewünschte Form gebracht werden (so genanntes "Thermoforming" des Stringers 33). Ein Verbinden der ersten und zweiten Bauteilkomponenten 11, 12 erfolgt bei dem elften Beispiel noch nicht während des Kriechumformens. Werden der Stringer 33 und die Schalenhaut 26 nach dem Erkalten und der Wegnahme von Druck und/oder aufgebrachter Umformkraft aus der Form 16 entnommen, dann haben die Schalenhaut 26 und der Stringer 33 die für das fertige Strukturbauteil 6 gewünschte Geometrie und sind darüber hinaus vorteilhaft durch das Umformen im selben Verfahrensschritt exakt aneinander angepasst. Die Schalenhaut 26 und der Stringer 33 verbleiben nach dem Entnehmen aus der Form 16 in ihrem zueinander passgenauen Zustand, da es zu keinem Zurückfedern oder "Spring back" der Schalenhaut 26 kommt.

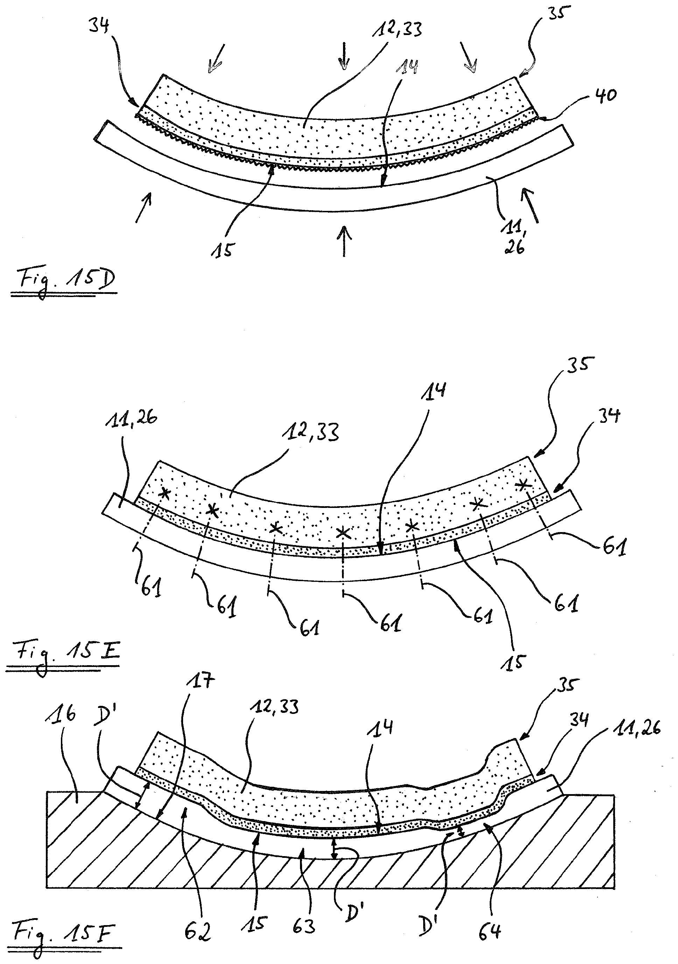

In einem anschließenden Schritt werden gemäß dem elften Beispiel die umgeformte Schalenhaut 26 und der Stringer 33 miteinander verbunden. Dies kann bei einer in Figur 15D skizzierten Variante durch Verkleben erfolgen, indem zum Beispiel eine Klebstoffschicht 40 auf eine untere Oberfläche 15 eines ersten Schenkels 34 des hier L-förmigen Stringers 33 aufgetragen wird. Dann können die beiden umgeformten Bauteilkomponenten 11, 12 in Pfeilrichtung zusammengesetzt werden. Nach dem Aushärten des Klebstoffes ist das Strukturbauteil fertig. In einer alternativen Variante, wie sie die Figur 15E zeigt, können die Schalenhaut 26 und der Stringer 33 nach dem Kriechumformen und dem Entnehmen aus der Form 16 miteinander mittels Nieten 61 verbunden werden.

Eine Variante des in Figur 15C skizzierten Schrittes des Verfahrens zeigt Figur 15F. Die Schalenhaut 26 kann an verschiedenen Stellen unterschiedlich dick ausgebildet sein, beispielsweise um ihr Gesamtgewicht zu verringern. In einem ersten Bereich 62 kann die Schalenhaut 26 ein vergleichsweise große Dicke D' aufweisen, während diese Dicke D' in benachbarten Bereichen 63 und 64 geringer sein kann. Während des Kriechumformens kann sich der Stringer 33, dessen Matrix bei der gewählten Temperatur erweicht, jedoch nicht aufschmilzt, mit Vorteil an die unterschiedlichen Dicken D' der Schalenhaut 26 anpassen. Nach dem Kriechumformen und Erkalten passen Stringer 33 und Schalenhaut 26 exakt zusammen und können passgenau aneinander befestigt werden, wiederum zum Beispiel durch Verkleben oder Vernieten. Ein aufwendiges und teures passgenaues Bearbeitung eines Stringers kann entfallen.

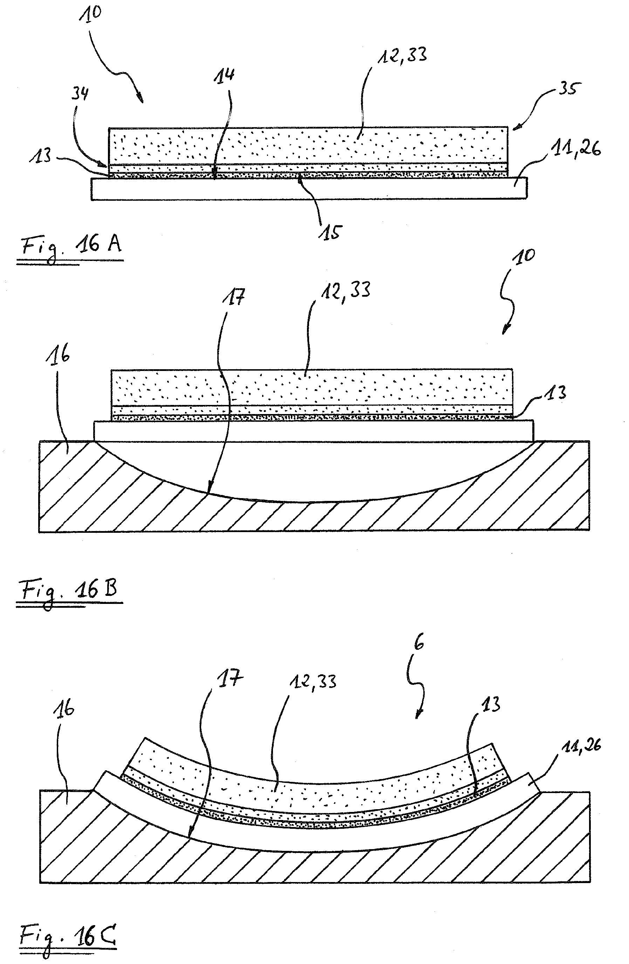

Das zwölfte Beispiel gemäß den Figuren 16A bis 16C stellt ein Abwandlung des vorstehend beschriebenen elften Beispiels dar. Hierbei wird beim Bilden einer Anordnung 10 zwischen einer ersten Bauteilkomponente 11 und einer zweiten Bauteilkomponente 12 eine Schicht 13 eines ersten thermoplastischen Kunststoffmaterials 13 angeordnet, durch Einlegen einer Folie oder durch Beschichten, wie zu den Figuren 4, 5, 5A, 5B, 6 und 6A bereits beschrieben. Insbesondere eine obere Oberfläche 14 der Schalenhaut 26, welche die erste Bauteilkomponente 11 bildet, wird hierbei durch Anodisieren oder Aufbringen eines Umwandlungsüberzugs oder einer Sol-Gel-Schicht vorbehandelt, wie ebenfalls bezüglich der Figuren 4, 5, 5A, 5B, 6 und 6A bereits beschrieben wurde. Während die Schalenhaut 26 wiederum aus einer AlMgSc-Legierung mit einer Stärke von 0,8 mm bis etwa 6 mm ausgeführt ist, ist der Stringer 33, welcher die zweite Bauteilkomponente 12 bildet, als eine Verbundkomponente ausgebildet, in deren Matrix Verstärkungsfasern, zum Beispiel Glasfasern, Kohlefasern oder Zylonfasern, eingebettet sind. Bei dem zwölften Beispiel ist die Matrix des Stringers 33 aus einem zweiten thermoplastischen Kunststoffmaterial ausgebildet, welches von dem ersten thermoplastischen Kunststoffmaterial 13 verschieden ist.

Die ersten und zweiten thermoplastischen Kunststoffmaterialien sind derart gewählt, dass, wenn die gebildete Anordnung 10 einem Kriechumformen unterworfen wird, das erste thermoplastische Kunststoffmaterial 13 zwischen den Bauteilkomponenten 11 und 12 bei der für das Kriechumformen gewählten Temperatur wenigstens teilweise aufschmilzt, um die Bauteilkomponenten 11, 12 miteinander dauerhaft zu verbinden. Gleichzeitig erweicht das zweite thermoplastische Kunststoffmaterial der Matrix der zweiten Bauteilkomponente 12 bei dem Kriechumformen, ohne aufzuschmelzen. Dadurch kann die zweite Bauteilkomponente 12 bei diesem Beispiel während des Kriechumformens ebenfalls umgeformt werden. Es kann somit in einem Verfahrensschritt ein "creep forming" der Schalenhaut 26, ein "thermoforming" des Stringers 33 und ein Verbinden beider durch Aufschmelzen und Wiedererstarren des zwischen beiden angeordneten thermoplastischen Kunststoffmaterials 13 erfolgen. Auch bei diesem Ausführungsbeispiel kann sich der Stringer 33, wie zu Figur 15F beschrieben, an Dickenunterschiede der Schalenhaut 26 anpassen. Die Temperatur für den Kriechumformvorgang wird wiederum zwischen 275°C und 375°C gewählt und vorzugsweise länger als zehn Minuten aufrechterhalten, beispielsweise im Bereich von etwa 30 Minuten bis eine Stunde.

Auch bei den Beispielen der Figuren 15A bis 15F und 16A bis 16C kann in Ausführungsbeispielen die als Schalenhaut 26 ausgebildete erste Bauteilkomponente 11, ähnlich wie in den Figuren 14A bis 14C, mehrlagig ausgebildet sein.

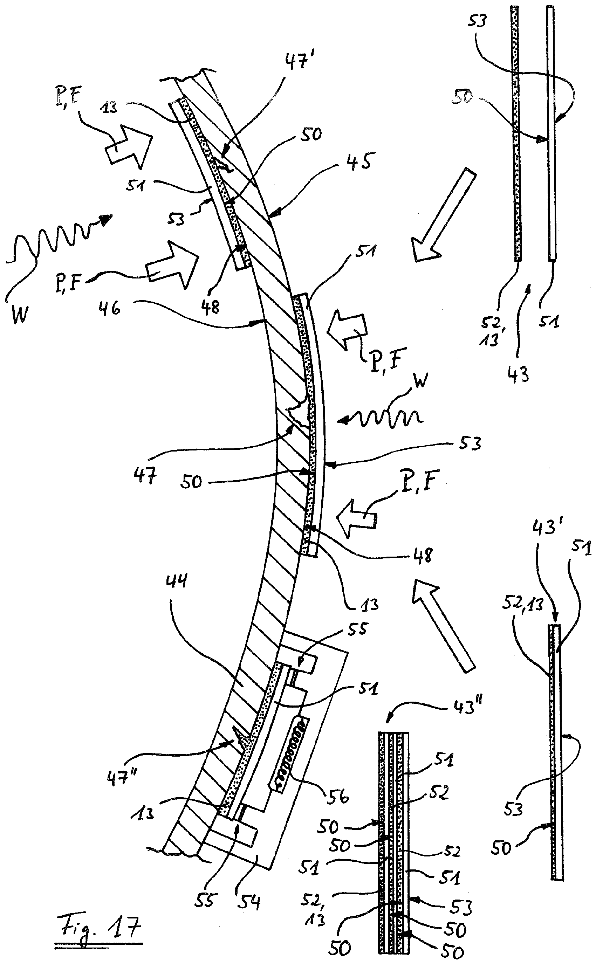

Die Durchführung eines Reparaturverfahrens gemäß einem weiteren veranschaulichenden Beispiel ist in der Figur 17 schematisch dargestellt. Ein Strukturbauteil 44, von dem in Figur 17 nur ein Abschnitt gezeigt ist, weist an einer Außenseite 45 eine Schadstelle 47 und eine Schadstelle 47" auf. Ferner weist das Strukturbauteil 44 bei diesem Beispiel an einer Innenseite 46 eine weitere Schadstelle 47' auf. Bei dem Strukturbauteil 44 kann es sich um eine Rumpfschale 4 oder eine Flügelschale 5 eines Flugzeugs, aber auch um ein anderes Strukturbauteil eines Luft- oder Raumfahrzeugs, um ein Strukturbauteil eines Kraftfahrzeugs oder ein Strukturbauteil eines Gebäudes handeln. Das Strukturbauteil 44 gemäß Figur 17 ist mit einer gewölbten Schalenhaut ausgebildet und kann auf der Innenseite 46 mit nicht dargestellten Versteifungselementen wie Stringern, Spanten und dergleichen ausgesteift sein.

Um die Schadstelle 47, 47' oder 47" zu reparieren, wird zunächst ein Doppler 43 oder alternativ hierzu ein Doppler 43' oder 43" bereitgestellt. Der Doppler 43 ist bei dem in Figur 17 gezeigten Beispiel zweiteilig mit einer Lage 51 eines durch Kriechumformen umformbaren Materials und einer als Folie ausgebildeten Schicht 52 eines thermoplastischen Kunststoffmaterials 13. Die Folie aus dem thermoplastischen Kunststoffmaterial 13 kann eingebettete Verstärkungsfasern, wie Glasfasern, Kohlefasern oder Zylonfasern oder Kombinationen dieser aufweisen und für die Durchführung des Reparaturverfahrens bereits vorgefertigt und zum Beispiel in Standardgrößen zugeschnitten bereitgestellt werden. Alternativ kann die Folie vor Ort auf die Größe des beschädigten Bereichs individuell zugeschnitten werden. Auch die Lage 51 kann als Standardzuschnitt vorliegen oder individuell zugeschnitten werden. In dem gezeigten Ausführungsbeispiel ist die Lage 51 als Folie oder dünnes Blech aus einer AlMgSc-Legierung mit einer Stärke zwischen 0,2 mm und 6,0 mm, bevorzugt zwischen 0,4 mm und 3,8 mm gefertigt. Die Folie aus dem thermoplastischen Kunststoffmaterial 13 wird zum Reparieren zwischen das Strukturbauteil 44 und die Lage 51 eingelegt.

Der alternativ verwendbare Doppler 43' umfasst ebenfalls eine Lage 51, die wie bei dem Doppler 43 aus einer AlMgSc-Legierung ausgebildet ist. Eine Oberfläche 50 der Lage 51 ist flächig mit einem thermoplastischen Kunststoffmaterial 13 beschichtet. Dies kann durch thermisches Aufspritzen des thermoplastischen Kunststoffmaterials 13 zur Bildung einer Schicht 52 auf die Lage 51 erfolgen. Der Doppler 43' ist somit aus einem Halbzeug mit einer mit dem thermoplastischen Kunststoffmaterial 13 beschichteten Lage 51 in geeigneter Weise zugeschnitten. Vorteilhaft ist hierbei, dass der Doppler 43' einteilig ist und damit bei der Reparatur Vorteile in der Handhabung bietet. Eine weitere Variante eines Dopplers zur Reparatur der Schadstelle 47, 47' oder 47" ist mit dem Bezugszeichen 43" versehen. Der Doppler 43" ist ebenfalls aus einem Halbzeug zugeschnitten, weist jedoch mehrere Lagen 51 aus einer AlMgSc-Legierung auf, wobei zwischen jeweils zwei Lagen 51 eine Schicht 52 aus einem thermoplastischen Kunststoffmaterial 13 vorgesehen ist. Auch bei dem Doppler 43", wie bei dem Doppler 43', liegt eine Oberfläche 53 einer obersten Lage 51 frei, während auf einer gegenüberliegenden Unterseite des Dopplers 43" eine Schicht 52 des thermoplastischen Kunststoffmaterials 13 freiliegt. Auch bei den einteiligen Dopplern 43' und 43" können in das thermoplastische Kunststoffmaterial zur Verbesserung der mechanischen Eigenschaften des Dopplers 43', 43" Verstärkungsfasern der vorstehend genannten Arten eingebettet werden.

Um die Schadstelle 47, 47' oder 47" zu reparieren, wird ein Doppler 43, 43' oder 43" derart auf das Strukturbauteil 44 aufgelegt, dass der Doppler 43, 43' oder 43" die Schadstelle 47, 47' oder 47" bevorzugt vollständig abdeckt. Dabei liegt die jeweilige zu dem Strukturbauteil 44 gewandte äußere Schicht 52 aus dem thermoplastischen Kunststoffmaterial 13 auf der Außenseite 45 bzw. der Innenseite 46 des Strukturbauteils 44 zumindest teilweise an.

Die Doppler 43, 43', 43" und die Halbzeuge, aus denen die Doppler 43, 43', 43" gefertigt sind, können als flächiges, ebenes Material vorproduziert werden. Strukturbauteile 44 von Luft- oder Raumfahrzeugen sind jedoch oft in mehreren Raumdimensionen gekrümmt. Dadurch liegt der Doppler 43, 43', 43" zunächst meist nicht vollflächig auf dem Strukturbauteil 44 auf. Um eine vollständiges Anlegen zu erreichen, wird ein Druck P und/oder eine Kraft F auf den Doppler 43, 43', 43" aufgebracht, zum Beispiel mittels einer geeigneten Spannvorrichtung. Nachfolgend wird der Doppler 43, 43', 43" mittels einer geeigneten und bevorzugt mobilen Heizeinrichtung auf eine Temperatur erwärmt, bei der das thermoplastische Kunststoffmaterial wenigstens der auf dem Strukturbauteil 44 aufliegenden Schicht 52 zumindest teilweise aufschmilzt. Auch ein Abschnitt des Strukturbauteils 44 wird hierbei bevorzugt erwärmt. Die Temperatur kann beispielsweise zwischen 275°C und 375°C liegen und wird ein vorbestimmte Zeit, zum Beispiel mehr als zehn Minuten, aufrechterhalten. Dabei werden die Lagen 51 durch Kriechen des Materials umgeformt. Nachfolgend wird dafür gesorgt, dass das Strukturbauteil 44 und der Doppler 43, 43', 43" wieder abkühlen können, wobei das aufgeschmolzene thermoplastische Kunststoffmaterial 13 wieder erstarrt und hierbei die Lage 51 und somit den gesamten Doppler 43, 43', 43" mit dem Strukturbauteil 44 dauerhaft und zuverlässig verbindet. Vorteilhaft kann hierbei ein Teil des aufgeschmolzenen thermoplastischen Kunststoffmaterials 13 auch kleinere Schadstellen 47'', wie kleinere Ritzungen, Kerben und dergleichen, auffüllen. Das zu reparierende Strukturbauteil 44 besteht bei diesem Ausführungsbeispiel ebenfalls aus einer AlMgSc-Legierung, wodurch die mechanischen Eigenschaften des Strukturbauteils 44 bei dem Erwärmen nicht leiden.

Eine mobile Spann- und Heizeinrichtung 54 mit Spannelementen 55 zum Aufbringen von Kräften F auf den Doppler 43, 43', 43" und einem Heizelement 56 zum Einbringen von Wärme W ist in Figur 17 beim Einsatz zur Reparatur der Schadstelle 47" an der Außenseite 45 des Strukturbauteils 44 schematisch gezeigt. Das unter Bezugnahme auf Figur 17 beschriebene Reparaturverfahren kann zum Beispiel bei der turnusmäßigen Wartung und Instandhaltung eines Flugzeugs 1 zur Reparatur kleinerer Beschädigungen der Außenhaut des Rumpfes 2 eingesetzt werden. Auch Schadstellen 47' an der Innenseite 46 können repariert werden.

Auch bei dem Reparaturverfahren der Figur 17 wird die Oberfläche des Strukturbauteils 44 abschnittsweise, zumindest in einem Bereich um die Schadstelle, in dem der Doppler aufgelegt wird, bevorzugt durch Reinigen und Entfetten sowie durch Anodisieren oder Aufbringen eines Umwandlungsüberzugs oder einer Sol-Gel-Schicht vorbehandelt, um das Haften des thermoplastischen Kunststoffmaterials zu verbessern. Gleiches gilt für die mit dem thermoplastischen Kunststoffmaterial in Berührung tretenden Oberflächen 50 der Lage 51 oder der mehreren Lagen 51.

Was die Vorbehandlung der Oberflächen der Bauteilkomponenten oder Lagen, die Wahl der Temperaturen, das Aufbringen der Kräfte F und des Druckes P und die Wahl der Form 16 angeht, so gilt für das zweite bis zwölfte veranschaulichende Beispiel bzw. Ausführungsbeispiel das bereits zu dem ersten Ausführungsbeispiel Gesagte, wobei bei dem elften Beispiel die Vorbehandlung entfallen kann, da während des Umformens kein Verbinden mittels des thermoplastischen Kunststoffmaterials erfolgt. Bei den ersten bis zwölften veranschaulichenden Beispielen und Ausführungsbeispielen kann das Aufbringen von Wärme in einem Ofen oder in einem Autoklaven, in den die Form 16 und die umzuformende Anordnung 10 bzw. der umzuformende Stapel 20 eingeführt wird, erfolgen.

Als thermoplastisches Kunststoffmaterial für einzulegende Filme oder Folien, für ein Beschichten und/oder für die Matrix einer Verbundkomponente kommt bei sämtlichen gezeigten veranschaulichenden Beispielen und Ausführungsbeispielen ein Hochleistungsthermoplast, insbesondere ein Polyaryletherketon (PAEK), ein Polyetheretherketon (PEEK), ein Polyetherketon (PEK), ein Polyetherimid (PEI) oder ein Polyamidimid (PAI), zum Einsatz. Auch die Verwendung anderer thermoplastischer Kunststoffe ist jedoch denkbar. Das thermoplastische Kunststoffmaterial ist in den Figuren zur besseren Übersicht mit einem gepunkteten Muster versehen. Die Filme oder Folien bzw. die Beschichtungen haben eine Dicke, die bevorzugt in einem Bereich von 0,05 mm bis 0,3 mm liegt.

Die vorstehende Beschreibung der veranschaulichenden Beispiele und Ausführungsbeispiele der Erfindung nimmt Bezug auf Figuren, in welchen die Form 16 jeweils im Schnitt dargestellt ist. Hierbei ist nur eine im Wesentlichen zylindrische, zweidimensionale Krümmung der formenden Oberfläche 17 der Form 16 erkennbar. Dennoch versteht es sich, dass die Form 16 mit einer beliebig und auch in mehreren Raumrichtungen gekrümmten formenden Oberfläche 17 ausgestattet sein kann. Das erzeugte Strukturbauteil 6 sowie das erzeugte Halbzeug 7 können somit ebenfalls auch in mehreren Raumrichtungen gekrümmt sein, mithin beliebige dreidimensional geformte Oberflächen aufweisen, wie sie insbesondere bei Schalenbauteilen für moderne Luftfahrzeuge vorkommen.

Obwohl die vorliegende Erfindung vorstehend anhand bevorzugter veranschaulichender Beispiele und Ausführungsbeispiele beschrieben wurde, ist sie darauf nicht beschränkt, sondern auf vielfältige Weise modifizierbar.

Beispielsweise kann die vorliegende Erfindung nicht nur auf dem Gebiet der Luft- und Raumfahrt, sondern auch in der Fahrzeugtechnik oder der Gebäudetechnik Anwendung finden, zum Beispiel bei der Fertigung von Karosserieteilen oder Gebäudebauteilen.

Die vorliegende Offenbarung schafft ein Verfahren zur Herstellung eines Strukturbauteils mit zumindest zwei miteinander mittels eines thermoplastischen Kunststoffmaterials verbundenen Bauteilkomponenten und kann insbesondere auf dem Gebiet der Luft- oder Raumfahrt Anwendung finden. In einem ersten Verfahrensschritt werden eine erste Bauteilkomponente und eine zweite Bauteilkomponente bereitgestellt und zum Bilden einer Anordnung angeordnet. In einem weiteren Schritt erfolgt ein Kriechumformen der Anordnung bei einer Temperatur, welche in der Weise gewählt wird, dass das thermoplastische Kunststoffmaterial während des Kriechumformens zumindest teilweise aufschmilzt, um die erste Bauteilkomponente und die zweite Bauteilkomponente zu verbinden. Darüber hinaus werden ein weiteres Verfahren zur Herstellung eines Strukturbauteils, erfindungsgemäß ein Verfahren zur Herstellung eines Halbzeugs für die Fertigung eines Strukturbauteils durch Kriechumformen des Halbzeugs, sowie ein Reparaturverfahren für ein Strukturbauteil mit einer Schadstelle bereitgestellt. Ferner bezieht sich die Erfindung auf Strukturbauteile, insbesondere für ein Luft- oder Raumfahrzeug, auf ein Luft- oder Raumfahrzeug mit einem derartigen Strukturbauteil, und auf ein Halbzeug für die Herstellung eines Strukturbauteils durch Kriechumformen des Halbzeugs. Offenbart wird ferner ein Halbzeug für die Reparatur eines Strukturbauteils.

## Patentansprüche

1. Halbzeug (7) für die Herstellung eines Strukturbauteils (6), insbesondere für die Luft- oder Raumfahrt,
mit zumindest zwei Lagen (21, 22; 36), zwischen welchen eine Schicht (28; 37) eines thermoplastischen Kunststoffmaterials (13) angeordnet ist,
**dadurch gekennzeichnet,**
**dass** das Halbzeug (7) ein Halbzeug (7) für die Herstellung des Strukturbauteils (6) durch Kriechumformen des Halbzeugs (7) ist und die zumindest zwei Lagen (21, 22; 36) zumindest zwei Lagen (21, 22; 36) eines durch Kriechumformen umformbaren Materials sind,
**dass** die Lagen (21, 22; 36) zumindest teilweise aus einer Aluminium-Magnesium-Legierung oder einer Aluminium-Magnesium-Scandium-Legierung ausgebildet sind, und
**dass** das Halbzeug (7) durch Kriechumformen bei einer Temperatur, die in einem Bereich von 250°C bis 375°C gewählt ist, umformbar ist und das thermoplastische Kunststoffmaterial (13) bei der gewählten Temperatur für ein Verbinden der Lagen (21, 22; 36) zumindest teilweise aufschmelzbar ist.

2. Halbzeug nach Anspruch 1,
**dadurch gekennzeichnet,**
**dass** das Halbzeug (7) durch Kriechumformen bei einer Temperatur, die in einem Bereich von 275°C bis 375°C, weiter bevorzugt in einem Bereich von 275°C bis 325°C, gewählt ist, umformbar ist.

3. Halbzeug nach Anspruch 1 oder 2,
**dadurch gekennzeichnet,**
**dass** die beiden Lagen (21, 22; 36) mittels der Schicht (28; 37) des thermoplastischen Kunststoffmaterials (13) miteinander verbunden sind.

4. Halbzeug nach einem der vorstehenden Ansprüche,
**dadurch gekennzeichnet,**
**dass** Verstärkungsfasern, bevorzugt Glasfasern, Kohlefasern oder Zylonfasern, in das thermoplastische Kunststoffmaterial (13) der Schicht (28; 37) eingebettet sind.

5. Halbzeug nach einem der vorstehenden Ansprüche,
**dadurch gekennzeichnet,**
**dass** eine erste Lage (21; 36) und eine zweite Lage (22; 36) zum Bilden eines Stapels (20) übereinander angeordnet sind und dass das thermoplastische Kunststoffmaterial (13) beim Bilden des Stapels (20) als Film oder als Folie zwischen die erste Lage (21; 36) und die zweite Lage (22; 36) eingelegt ist, wobei eine Stärke des Films bzw. der Folie bevorzugt in einem Bereich von 0,1 bis 0,6 mm liegt.

6. Halbzeug nach einem der Ansprüche 1 bis 4,
**dadurch gekennzeichnet,**
**dass** eine erste Lage (21; 36) und eine zweite Lage (22; 36) zum Bilden eines Stapels (20) übereinander angeordnet sind und dass die erste Lage (21; 36) und/oder die zweite Lage (22; 36) vor dem Bilden des Stapels (20) zumindest abschnittsweise mit dem thermoplastischen Kunststoffmaterial (13) beschichtet sind/ist, insbesondere durch thermisches Spritzen des thermoplastischen Kunststoffmaterials (13) auf die jeweilige Lage (21, 22; 36).

7. Verwendung eines Halbzeugs (7) gemäß einem der vorstehenden Ansprüche zur Herstellung eines Strukturbauteils (6) durch Kriechumformen des Halbzeugs (7),
wobei die beiden Lagen (21, 22; 36) des durch Kriechumformen umformbaren Materials mittels der Schicht (28; 37) des thermoplastischen Kunststoffmaterials (13) miteinander verbunden sind, und
wobei das Kriechumformen bei einer Temperatur erfolgt, die in einem Bereich von 250°C bis 375°C gewählt wird.

8. Verwendung nach Anspruch 7,
**dadurch gekennzeichnet,**
**dass** das Kriechumformen bei einer Temperatur erfolgt, die in einem Bereich von 275°C bis 375°C, bevorzugt in einem Bereich von 275°C bis 325°C, gewählt wird.

9. Verwendung nach Anspruch 7 oder 8,
**dadurch gekennzeichnet,**
**dass** das Kriechumformen mittels einer Form (16) erfolgt, welche eine Oberfläche (17) aufweist, deren Geometrie einer Oberflächengeometrie des herzustellenden Strukturbauteils (6) in dessen fertigem Zustand im Wesentlichen entspricht.

10. Strukturbauteil (6), insbesondere für ein Luft- oder Raumfahrzeug (1), hergestellt durch Kriechumformen eines Halbzeugs (7) gemäß einem der Ansprüche 1 bis 6 bei einer Temperatur, welche in einem Bereich von 250°C bis 375°C gewählt wird.

11. Luft- oder Raumfahrzeug (1) mit einem Strukturbauteil (6) nach Anspruch 10.

12. Verfahren zur Herstellung eines Halbzeugs (7) für die Fertigung eines Strukturbauteils (6) durch Kriechumformen des Halbzeugs (7), insbesondere für die Luft- oder Raumfahrt, mit zumindest zwei miteinander mittels einer Schicht (28; 37) eines thermoplastischen Kunststoffmaterials (13) verbundenen Lagen (21, 22; 36) eines durch Kriechumformen umformbaren Materials, wobei das Verfahren die folgenden Verfahrensschritte aufweist:
Bereitstellen und Anordnen einer ersten Lage (21; 36) und einer zweiten Lage (22; 36) übereinander zum Bilden eines Stapels (20); und
Erwärmen des Stapels (20) auf eine Temperatur, welche in der Weise gewählt wird, dass das thermoplastische Kunststoffmaterial (13) für ein Verbinden der ersten Lage (21; 36) und der zweiten Lage (22; 36) zumindest teilweise aufschmilzt;
wobei die erste Lage (21; 36) und die zweite Lage (22; 36) zumindest teilweise aus einer Aluminium-Magnesium-Legierung oder einer Aluminium-Magnesium-Scandium-Legierung ausgebildet werden;
wobei die Temperatur in einem Bereich von 250°C bis 375°C gewählt wird; und
wobei während des Erwärmens ein Kriechumformen des Stapels (20) erfolgt, um dem Halbzeug (7) eine gekrümmte Geometrie zu verleihen.

13. Verfahren nach Anspruch 12,
**dadurch gekennzeichnet,**
**dass** vor dem Bilden des Stapels (20) oder während des Erwärmens Verstärkungsfasern, bevorzugt Glasfasern, Kohlefasern oder Zylonfasern, in das thermoplastische Kunststoffmaterial (13) der Schicht (37) eingebettet werden.

14. Verfahren nach einem der Ansprüche 12 oder 13,
**dadurch gekennzeichnet,**
**dass** die Temperatur in einem Bereich von 275°C bis 375°C, bevorzugt in einem Bereich von 275°C bis 325°C, gewählt wird.

## Claims

1. Semi-finished product (7) for the manufacture of a structural component (6), in particular for aerospace applications,
with at least two layers (21, 22; 36), between which a layer (28; 37) of a thermoplastic material (13) is arranged,
**characterized in that**
the semi-finished product (7) is a semi-finished product (7) for the production of the structural component (6) by creep-forming the semi-finished product (7), and the at least two layers (21, 22; 36) are at least two layers (21, 22; 36) of a material which can be formed by creep-forming,
**in that** the layers (21, 22; 36) are formed at least partially from an aluminium-magnesium alloy or an aluminium-magnesium-scandium alloy, and
that the semi-finished product (7) is formable by creep forming at a temperature selected in a range of 250°C to 375°C and the thermoplastic material (13) is at least partially meltable at the selected temperature for joining the layers (21, 22; 36).

2. Semi-finished product according to claim 1,
**characterized in that**
the semi-finished product (7) is formable by creep forming at a temperature selected in a range from 275°C to 375°C, more preferably in a range from 275°C to 325°C.

3. Semi-finished product according to claim 1 or 2, **characterized in that**
the two layers (21, 22; 36) are bonded to one another by means of the layer (28; 37) of thermoplastic material (13) .

4. Semi-finished product according to one of the preceding claims,
**characterized in that**
reinforcing fibres, preferably glass fibres, carbon fibres or Zylon fibres, are embedded in the thermoplastic resin material (13) of the layer (28; 37).

5. Semi-finished product according to one of the preceding claims,
**characterized in that**
a first layer (21; 36) and a second layer (22; 36) are arranged one above the other to form a stack (20), and **in that** the thermoplastic material (13) is inserted as a film or as a foil between the first layer (21; 36) and the second layer (22; 36) when the stack (20) is formed, a thickness of the film or of the foil preferably lying in a range from 0,1 to 0,6 mm.

6. Semi-finished product according to one of claims 1 to 4, **characterized by**
in that a first layer (21; 36) and a second layer (22; 36) are arranged one above the other to form a stack (20), and in that the first layer (21; 36) and/or the second layer (22; 36) are/is coated at least in sections with the thermoplastic material (13) before the stack (20) is formed, in particular by thermal spraying of the thermoplastic material (13) onto the respective layer (21, 22; 36).

7. Use of a semi-finished product (7) according to any one of the preceding claims for producing a structural component (6) by creep forming,
wherein the two layers (21, 22; 36) of the creep-formable material are bonded together by means of the layer (28; 37) of the thermoplastic resin material (13), and
wherein the creep forming is performed at a temperature selected in a range of 250°C to 375°C.

8. Use according to claim 7,
**characterized in that**
the creep forming takes place at a temperature selected in a range from 275°C to 375°C, preferably in a range from 275°C to 325°C.

9. Use according to claim 7 or 8,
**characterized in that**
the creep forming is carried out by means of a mould (16) which has a surface (17) whose geometry essentially corresponds to a surface geometry of the structural component (6) to be produced in its finished state.

10. Structural component (6), in particular for an aircraft or spacecraft (1), produced by creep-forming a semi-finished product (7) according to any one of claims 1 to 6 at a temperature selected in a range from 250°C to 375°C.

11. An aircraft or spacecraft (1) with a structural component (6) according to claim 10.

12. Method for producing a semi-finished product (7) for the manufacture of a structural component (6) by creep-forming the semi-finished product (7), in particular for the aerospace industry, with at least two layers (21, 22; 36) of a material which can be formed by creep-forming, which layers are bonded to one another by means of a layer (28; 37) of a thermoplastic material (13), the method having the following method steps:
Providing and arranging a first layer (21; 36) and a second layer (22; 36) on top of each other to form a stack (20); and
Heating the stack (20) to a temperature selected to at least partially melt the thermoplastic material (13) for bonding the first layer (21; 36) and the second layer (22; 36) ;
wherein the first layer (21; 36) and the second layer (22; 36) are formed at least partially from an aluminium-magnesium alloy or an aluminium-magnesium-scandium alloy;
wherein the temperature is selected in a range of 250°C to 375°C; and
wherein creep forming of the stack (20) occurs during heating to impart a curved geometry to the semi-finished product (7).

13. Method according to claim 12,
**characterised in that**
reinforcing fibres, preferably glass fibres, carbon fibres or Zylon fibres, are embedded in the thermoplastic material (13) of the layer (37) before the stack (20) is formed or during heating.

14. A method according to any one of claims 12 or 13, **characterized in that**
the temperature is selected in a range from 275°C to 375°C, preferably in a range from 275°C to 325°C.

## Revendications

1. Produit semi-fini (7) pour la fabrication d'un élément de structure (6), en particulier pour des applications aérospatiales,
avec au moins deux couches (21, 22; 36), entre lesquelles est disposée une couche (28; 37) d'un matériau thermoplastique (13),
**caractérisé en ce que**
le produit semi-fini (7) est un produit semi-fini (7) pour la producton de la composante structurelle (6) par fluage du produit semi-fini (7), et les au moins deux couches (21, 22 ; 36) sont au moins deux couches (21, 22; 36) d'un matériau qui peut être formé par fluage,
**en ce que** les couches (21, 22; 36) sont formées au moins partiellement d'un alliage aluminium-magnésium ou d'un alliage alu-magnésium-scandium, et
que le produit semi-fini (7) est formable par fluage à une température choisie dans une plage de 250°C à 375°C et que le matériau thermoplastique (13) est au moins partiellement fusible à la température choisie pour l'assemblage des couches (21, 22; 36).

2. Produit semi-fini selon la revendication 1,
**caractérisé en ce que**
le produit semi-fini (7) est formable par fluage à une température choisie dans une fourchette de 275°C à 375°C, de préférence dans une fourchette de 275°C à 325°C.

3. Produit semi-fini selon la revendication 1 ou 2, **caractérisé en ce que**
les deux couches (21, 22; 36) sont liées entre elles par la couche (28; 37) de matière thermoplastique (13).

4. Produit semi-fini selon l'une des revendications précédentes,
**caractérisé en ce que**
des fibres de renforcement, de préférence des fibres de verre, des fibres de carbone ou des fibres de Zylon, sont noyées dans la résine thermoplastique (13) de la couche (28; 37).

5. Produit semi-fini selon l'une des revendications précédentes,
**caractérisé en ce que**
une première couche (21; 36) et une deuxième couche (22; 36) sont disposées l'une au-dessus de l'autre pour former une pile (20), et **en ce que** le matériau thermoplastique (13) est inséré sous forme de film ou de feuille entre la première couche (21; 36) et la deuxième couche (22 ; 36) lors de la formation de la pile (20), une épaisseur du film ou de la feuille se situant de préférence dans une plage de 0,1 à 0,6 mm.

6. Produit semi-fini selon l'une des revendications 1 à 4, **caractérisé par**
en ce qu'une première couche (21; 36) et une deuxième couche (22; 36) sont disposées l'une au-dessus de l'autre pour former une pile (20), et en ce que la première couche (21; 36) et/ou la deuxième couche (22; 36) sont revêtues au moins par sections de la matière thermoplastique (13) avant la formation de la pile (20), en particulier par projection thermique de la matière thermoplastique (13) sur la couche respective (21, 22; 36).

7. Utilisation d'un produit semi-fini (7) selon l'une des revendications précédentes pour produire un composant structurel (6) par fluage,
dans laquelle les deux couches (21, 22; 36) du matériau formable par fluage sont liées ensemble au moyen de la couche (28; 37) du matériau de résine thermoplastique (13), et
dans laquelle la formation de fluage est effectuée à une température choisie dans une plage de 250°C à 375°C.

8. Utilisation selon la revendication 7,
**caractérisé en ce que**
le fluage se produit à une température choisie dans une fourchette de 275°C à 375°C, de préférence dans une fourchette de 275°C à 325°C.

9. Utilisation selon la revendication 7 ou 8,
**caractérisé en ce que**
le formage par fluage est effectué au moyen d'un moule (16) qui présente une surface (17) dont la géométrie correspond essentiellement à une géométrie de surface de l'élément de construction (6) à produire à l'état fini.

10. Elément de structure (6), en particulier pour un aéronef ou un vaisseau spatial (1), fabriqué par fluage d'un produit semi-fini (7) selon l'une quelconque des revendications 1 à 6 à une température choisie dans une gamme de 250°C à 375°C.

11. Un aéronef ou un vaisseau spatial (1) ayant une composante structurelle (6) selon la revendication 10.

12. Procédé de fabrication d'un produit semi-fini (7) pour la fabrication d'un élément de construction (6) par fluage du produit semi-fini (7), en particulier pour l'industrie aérospatiale, avec au moins deux couches (21, 22; 36) d'un matériau pouvant être formé par fluage, qui sont reliées entre elles par une couche (28; 37) d'un matériau thermoplastique (13), le procédé présentant les étapes de procédé suivantes:
Fournir et disposer une première couche (21; 36) et une deuxième couche (22; 36) l'une sur l'autre pour former une pile (20); et
Chauffage de la pile (20) à une température choisie pour faire fondre au moins partiellement le matériau thermoplastique (13) afin de lier la première couche (21; 36) et la deuxième couche (22; 36);
dans laquelle la première couche (21; 36) et la deuxième couche (22; 36) sont formées au moins partiellement d'un alliage aluminium-magnésium ou d'un alliage aluminium-magnésium-scandium;
où la température est choisie dans une plage de 250°C à 375°C; et
où la formation par fluage de la pile (20) se produit pendant le chauffage pour conférer une géométrie courbe au produit semi-fini (7).

13. Méthode selon la revendication 12,
**caractérisé en ce que**
des fibres de renforcement, de préférence des fibres de verre, des fibres de carbone ou des fibres de Zylon, sont incorporées dans la matière thermoplastique (13) de la couche (37) avant la formation de la pile (20) ou pendant le chauffage.

14. Une méthode selon l'une des revendications 12 ou 13, **caractérisé en ce que**
la température est choisie dans une fourchette de 275°C à 375°C, de préférence dans une fourchette de 275°C à 325°C.
